# EUROPEAN PATENT APPLICATION

(11) **EP 4 818 808 A1**
(43) Date of publication of application: **07.10.2026**
(21) Application number: 26168332.0
(22) Date of filing: 27.03.2026
(51) Int. Cl.: G03G 9/08, G03G 9/087

(54) **TONER**

(30) Priority: 28.03.2025 JP 2025055128
(71) Applicant: Canon Kabushiki Kaisha, Tokyo 146-8501 (JP)
(72) Inventor: AOKI, Kenji, Ohta-ku, Tokyo, 146-8501 (JP); IWASAKI, Shuhei, Ohta-ku, Tokyo, 146-8501 (JP); YAMADA, Kaho, Ohta-ku, Tokyo, 146-8501 (JP); TERUI, Yuhei, Ohta-ku, Tokyo, 146-8501 (JP); SAEKI, Tatsuya, Ohta-ku, Tokyo, 146-8501 (JP)
(74) Representative: TBK

(57) **Abstract**

A toner having a toner particle containing a binder resin, is provided wherein the binder resin includes a crystalline resin and an amorphous resin, the crystalline resin includes a crystalline vinyl resin having a specific monomer unit, a melting point peak derived from the crystalline vinyl resin is observed in a specific range, (i) a phase-separated structure having a crystalline phase containing the crystalline resin as a main component and an amorphous phase containing the amorphous resin as a main component is present, and (ii) when the region from the surface of the toner particle up to 700 nm into the toner particle is defined as a region A, and the region from the surface of the toner particle up to 200 nm into the toner particle is defined as a region B, the area proportions of the crystalline phase and the amorphous phase in the region A B satisfy a specific relationship.

## Description

### TECHNICAL FIELD

The present disclosure relates to a toner that is used in an electrophotographic method and an electrostatic recording method.

### BACKGROUND

In the related art, energy saving has been considered as a major technical issue in electrophotographic devices as well, and ways of significantly reducing the amount of heat applied to fixing devices have been investigated. There is an increasing need for toners that can be fixed with lower energy, that is, toners with so-called "low-temperature fixability".

As a method for enabling fixation at a low temperature, a toner with a plasticizer added thereto is examined in WO 2013/047296, for example. The plasticizer has an effect of increasing a softening rate of a binder resin while maintaining a glass transition temperature (Tg) of a toner, and can improve low-temperature fixability. However, since the toner is softened after a step of plasticizing the binder resin after the plasticizer is melted, the melting speed of the toner is limited, and it is desirable to further improve the low-temperature fixability.

Thus, a method using a crystalline resin as a binder resin is being investigated. An amorphous resin that is generally used as a toner binder resin does not exhibit a clear endothermic peak in differential scanning calorimeter (DSC) measurement, but the crystalline resin exhibits an endothermic peak (melting point) in DSC measurement.
The crystalline resins have regularly arranged molecular chains and thus have a property of minimal softening at temperatures lower than the melting points. In addition, when the melting points are exceeded, crystals rapidly melt, and accordingly, a rapid viscosity decrease is caused. Therefore, the crystalline resins have attracted attention as materials having an excellent sharp melt property and capable of achieving low-temperature fixability.

Toners using a crystalline vinyl resin having long-chain alkyl groups in the side chains in the molecule as a crystalline resin may be exemplified. Generally, crystalline vinyl resins have a main chain framework including long-chain alkyl groups in the side chains, the long-chain alkyl groups in the side chains crystallize, and thereby crystalline resins are formed.

On the other hand, the crystalline vinyl resin tends to exhibit a decrease in viscosity during storage at high temperatures and a decrease in heat-resistant storage stability. As a countermeasure, Japanese Patent Laid-Open No. 2014-130243 discloses a toner having a core-shell structure in which an amorphous resin is used for a shell that covers a core containing a crystalline vinyl resin. In addition, Japanese Patent Laid-Open No. 2024-001777 discloses a toner having a domain-matrix structure including a matrix made of a crystalline vinyl resin and a domain made of an amorphous resin.

### SUMMARY

On the other hand, with a toner in which a crystalline vinyl resin and an amorphous resin are used in combination, when another recording medium is superposed on a recording medium having a solid image, and lines, letters, or the like are written with a pencil or the like on the surface on which no solid image is formed, the color of the image tends to transfer to the other superposed recording medium. That is, the toner, in which a crystalline vinyl resin and an amorphous resin are used in combination, has poor image robustness.
When a large amount of the crystalline vinyl resin is present in a certain region from the surface inside the toner, such a phenomenon is likely to occur when the crystalline vinyl resin, which has relatively low strength against the pressure, forms a network in the toner on the fixed image. That is, when lines, letters or the like are written with a pencil or the like, a large pressure is applied locally to the recording medium, and it is thought that this pressure causes the crystalline vinyl resin parts that form a network to peel off from the printed surface, resulting in color transfer.

The present disclosure provides a toner having excellent low-temperature fixability and heat-resistant storage stability, as well as excellent image robustness.

The present disclosure in its aspect provides an exposure apparatus as specified in claim 1. Optional features are specified in claim 2 to 15.

According to the present disclosure, it is possible to provide a toner having excellent low-temperature fixability and heat-resistant storage stability, as well as excellent image robustness.
Features of the present disclosure will become apparent from the following description of embodiments with reference to the attached drawing. The following description of embodiments is described by way of example.

### BRIEF DESCRIPTION OF THE DRAWINGS

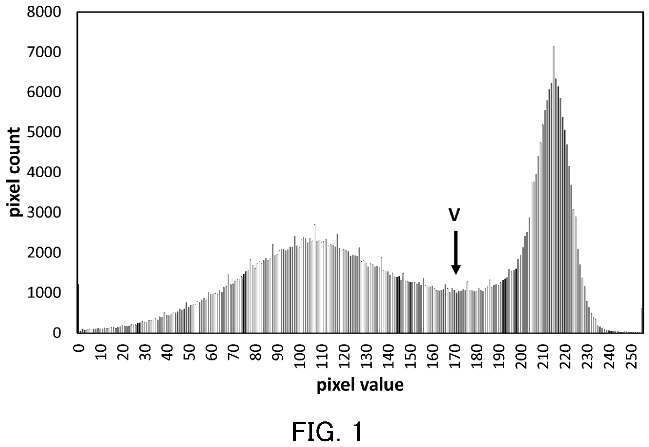

FIG. 1 is a diagram of a brightness histogram of 256 gradations obtained from a cross-sectional image of a toner particle.

### DESCRIPTION OF THE EMBODIMENTS

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily. In the present disclosure, for instance, a wording such as "at least one selected from the group consisting of XX, YY and ZZ" encompasses XX, YY and ZZ, a combination of XX and YY, a combination of XX and ZZ, a combination of YY and ZZ, and a combination of XX, YY and ZZ. In the case where XX represents a group, a plurality of members may be selected from XX, and the same is true for YY and ZZ.

The term (meth)acrylic acid ester refers to an acrylic acid ester and/or methacrylic acid ester.
The term "monomer unit" refers to a reacted form of a monomer substance in a polymer. For example, one unit is one carbon-carbon bond segment in the main chain of a polymer formed by polymerizing polymerizable monomers. The polymerizable monomer can be represented by the following Formula (C).

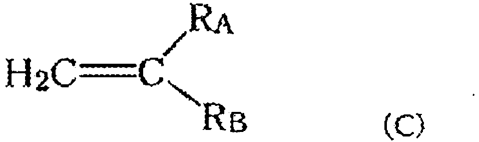

In Formula (C), R_{A} is a hydrogen atom or an alkyl group (preferably an alkyl group having 1 to 3 carbon atoms, and more preferably a methyl group), and R_{B} is an optional substituent.
The crystalline resin is a resin that exhibits a clear endothermic peak in differential scanning calorimeter (DSC) measurement.

Generally, since the crystalline vinyl resin exhibits a faster melting rate than the amorphous resin, when the crystalline vinyl resin is present in a "region very close to the surface within the toner particle," where heat is easily transferred during fixing, the low-temperature fixability is likely to be improved. On the other hand, the crystalline vinyl resin forms a structure that is regularly arranged at the molecular level. When external pressure is applied to this structure, since cracks are likely to occur within the arranged plane, the crystalline vinyl resin tends to have lower strength against the pressure than the amorphous resin.

In addition, when a large amount of the crystalline vinyl resin is present in "a certain region from the surface within the toner particle," a network of the crystalline vinyl resin is formed in the fixed image. The image robustness is reduced due to the network part of the crystalline vinyl resin, which has low strength against this pressure, and local pressure from a pencil or the like causes the image to peel off from the printed surface, starting from the network part.

Therefore, it is found that the above problems can be addressed by appropriately controlling the proportion of the crystalline phase containing a crystalline vinyl resin as a main component in the "region very close to the surface within the toner particle" and the proportion of the amorphous phase containing an amorphous resin as a main component in the "certain region from the surface within the toner particle."

The present disclosure relates to a toner comprising a toner particle comprising a binder resin, wherein
the binder resin comprises a crystalline resin and an amorphous resin,
the crystalline resin comprises a crystalline vinyl resin having a monomer unit (a) represented by Formula (1) below,
in differential scanning calorimetry (DSC) using the toner as a sample, a melting point peak derived from the crystalline vinyl resin is observed in a range of 50.0 to 80.0 °C,
when a cross section of the toner is observed under a scanning transmission electron microscope,
   (i) a phase-separated structure having a crystalline phase comprising the crystalline resin as a main component and an amorphous phase comprising the amorphous resin as a main component is present in the cross section of the toner particle,
   (ii) when the region from the surface of the toner particle up to 700 nm into the toner particle is defined as a region A, and the region from the surface of the toner particle up to 200 nm into the toner particle is defined as a region B,
within the amorphous phase present in the entire cross-section of the toner particle, at least 60 area% of the amorphous phase is present in the region A,
an area proportion of the amorphous phase in the region A is 45 to 90 area%,
an area proportion of the crystalline phase in the region B is 5 to 40 area%. 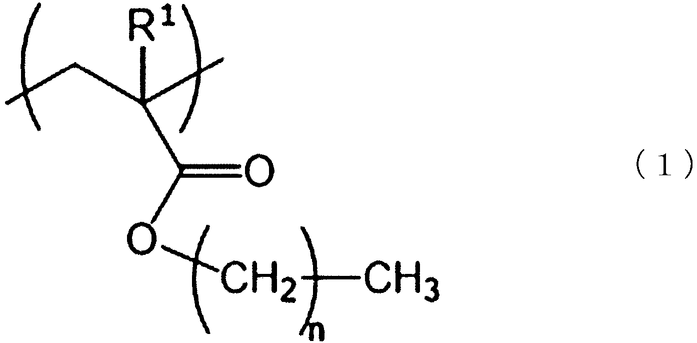
In Formula (1), R¹ is a hydrogen atom or a methyl group, n is an integer of 15 to 35.

The toner of the present disclosure is a toner containing toner particles having a binder resin, and the binder resin includes a crystalline resin and an amorphous resin. Here, the crystalline resin includes a crystalline vinyl resin having a monomer unit (a) represented by the following Formula (1).

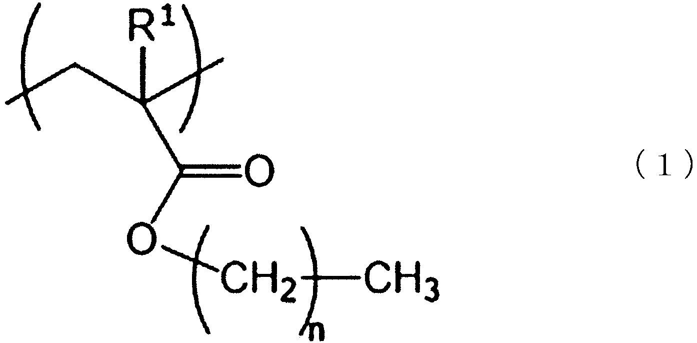

In Formula (1), R¹ is a hydrogen atom or a methyl group, and n is an integer of 15 to 35.
The monomer unit (a) has a long-chain alkyl group. When the vinyl resin has the monomer unit (a), it becomes a crystalline vinyl resin. When n in Formula (1) is 15 to 35, the crystallinity of the crystalline vinyl resin is likely to be exhibited. n is preferably an integer of 17 to 29.

In addition, in differential scanning calorimetry (DSC) using the toner as a sample, the melting point peak derived from the crystalline vinyl resin is observed in a range of 50.0 to 80.0 °C. When the melting point peak is within the above range, the low-temperature fixability is improved. When the melting point peak is lower than 50.0 °C, it is advantageous for the low-temperature fixability, but melting of the crystalline vinyl resin begins during high-temperature storage of the toner, and thus the heat-resistant storage stability significantly decreases. When the melting point peak is higher than 80.0 °C, excellent heat-resistant storage stability performance is exhibited, but the low-temperature fixability decreases.

The melting point peak derived from the crystalline vinyl resin is observed in a range of preferably 55.0 to 75.0 °C, and more preferably 60.0 to 70.0 °C. The melting point peak can be controlled by the content of the monomer unit (a) represented by Formula (1) in the crystalline vinyl resin, the chain length of n in the monomer unit (a) and the like.

In addition, when a cross section of the toner is observed under a scanning transmission electron microscope,
(i) a phase-separated structure having a crystalline phase containing the crystalline resin as a main component and an amorphous phase containing the amorphous resin as a main component is present in the cross section of the toner particle.

When the cross section of the toner particle is observed, a phase-separated structure having a crystalline phase containing the crystalline resin as a main component and an amorphous phase containing the amorphous resin as a main component is present, and thus excellent low-temperature fixability is obtained.

In addition, in observation of a cross section of the toner under a scanning transmission electron microscope, the region from the surface of the toner particle up to 700 nm into the toner particle is defined as a region A. That is, the region A is a region from the outline of the cross section of the toner particle up to 700 nm toward the center of the toner particle. In this case, within the amorphous phase present in the entire cross-section of the toner particle, 60 area% or more of the amorphous phase is present in the region A, and the area proportion of the amorphous phase in the region A is 45 to 90 area%.

The region A is "a certain region from the surface within the toner particle". When the proportion of the amorphous phase is within the above range, a network of the amorphous resin, rather than a network of the crystalline vinyl resin, is easily formed in the fixed image, and the image robustness is improved.
Within the amorphous phase present in the entire cross-section of the toner particle, when the proportion of the amorphous phase present in the region A is less than 60 area%, or when the area proportion of the amorphous phase in the region A is less than 45.0 area%, a network of the crystalline phase is easily formed in the fixed image, and the image robustness decreases. In addition, when the area proportion of the amorphous phase in the region A is larger than 90.0 area%, the low-temperature fixability decreases.

The proportion of the amorphous phase present in the region A within the amorphous phase present in the entire cross-section of the toner particle, and the area proportion of the amorphous phase in the region A can be controlled by the type and addition amount of the amorphous resin used, for example, by the type and addition amount of a shell resin used in the case of a toner produced by a suspension polymerization method, or by the timing of addition of the amorphous resin during toner production in the case of a toner produced by an emulsion aggregation method.

The proportion of the amorphous phase present in the region A within the amorphous phase present in the entire cross-section of the toner particle can be easily increased, for example, by reducing the amount of the amorphous resin added, or in the emulsion aggregation method, by delaying the timing of addition of the amorphous resin relative to the timing of addition of the crystalline resin. In addition, the proportion of the amorphous phase present in the region A within the amorphous phase present in the entire cross-section of the toner particle can be easily reduced, for example, by increasing the amount of the amorphous resin added, or by advancing the timing of addition of the amorphous resin relative to the timing of addition of the crystalline resin in the emulsion aggregation method.

The area proportion of the amorphous phase in the region A can be easily increased, for example, by increasing the amount of the amorphous resin added, by increasing the amount of the shell amorphous resin added in the suspension polymerization method, or by delaying the timing of addition of the amorphous resin relative to the timing of addition of the crystalline resin in the emulsion aggregation method. In addition, the area proportion of the amorphous phase in the region A can be easily reduced, for example, by reducing the amount of the amorphous resin added, by reducing the amount of the shell amorphous resin added in the suspension polymerization method, or by advancing the timing of addition of the amorphous resin relative to the timing of addition of the crystalline resin in the emulsion aggregation method.

It is preferable that 70 area% or more of the amorphous phase present in the entire cross-section of the toner particle be present in the region A. Within the amorphous phase present in the entire cross-section of the toner particle, the proportion of the amorphous phase present in the region A is, for example, 60 to 100 area%, preferably 70 to 100 area%, more preferably 80 to 100 area%, and still more preferably 80 to 99 area%.

In addition, the area proportion of the amorphous phase in the region A is preferably 45 to 85 area%, more preferably 45 to 80 area%, still more preferably 55 to 75 area%, and yet more preferably 57 to 70 area%.

In addition, in observation of a cross section of the toner under a scanning transmission electron microscope, the region from the surface of the toner particle up to 200 nm into the toner particle is defined as a region B. That is, the region B is a region from the outline of the cross section of the toner particle up to 200 nm toward the center of the toner particle. In this case, the area proportion of the crystalline phase in the region B is 5 to 40 area%.

The region B is "a region very close to the surface within the toner particle," and when the area proportion of the crystalline phase is within the above range, a certain amount of the crystalline resin exhibiting a relatively fast melting rate during fixing can be present, and the low-temperature fixability is improved. When the area proportion of the crystalline phase is less than 5 area%, the low-temperature fixability decreases. When the area proportion of the crystalline phase is more than 40 area%, the image robustness decreases.

The proportion of the crystalline phase in the region B can be controlled by the type and addition amount of the crystalline vinyl resin used, the type of the shell resin used in the case of a toner produced by a suspension polymerization method, or by the timing of addition of the crystalline resin during toner production in the case of a toner produced by an emulsion aggregation method.
The area proportion of the crystalline phase in the region B can be easily increased, for example, by increasing the amount of the crystalline vinyl resin added, by reducing the amount of the shell amorphous resin added in the suspension polymerization method, or by increasing the amount of the crystalline resin added in the latter half of the aggregation reaction in the emulsion aggregation method. In addition, the area proportion of the crystalline phase in the region B can be easily reduced, for example, by reducing the amount of the crystalline vinyl resin added, by increasing the amount of the shell amorphous resin added in the suspension polymerization method, or by reducing the amount of the crystalline resin added in the latter half of the aggregation reaction in the emulsion aggregation method.

The area proportion of the crystalline phase in the region B is preferably 5 to 35 area%, more preferably 5 to 30 area%, still more preferably 10 to 30 area%, and yet more preferably 15 to 25 area%.

When the cross section of the toner is observed, in the region other than the region A of the cross section of the toner particle, the area proportion of the crystalline phase in the region other than the region A is preferably 60 area% or more. This range indicates that a large amount of the crystalline phase is present inside the toner, and the low-temperature fixability is more likely to be improved. The area proportion of the crystalline phase in the region other than the region A is more preferably 70 area% or more. The area proportion of the crystalline phase in the region other than the region A is, for example, 60 to 99 area%, preferably 70 to 99 area%, and more preferably 75 to 98 area%.

The area proportion of the crystalline phase in the region other than the region A can be easily increased, for example, by increasing the amount of the crystalline resin added, or by increasing the amount of the shell amorphous resin added in the suspension polymerization. In addition, the area proportion of the crystalline phase in the region other than the region A can be easily reduced, for example, by reducing the amount of the crystalline resin added or by reducing the amount of the shell amorphous resin added in the suspension polymerization.

The crystalline resin will be described. The binder resin includes a crystalline resin. The crystalline resin includes a crystalline vinyl resin, but may also include other polyester resins, polyurethane resins, and epoxy resins, which have crystallinity.

The crystalline vinyl resin will be described.
The method of introducing the monomer unit (a) into a crystalline vinyl resin is a method of polymerizing the following (meth)acrylic acid ester: for example, stearyl (meth)acrylate, nonadecyl (meth)acrylate, eicosyl (meth)acrylate, heneicosanyl (meth)acrylate, behenyl (meth)acrylate, lignoceryl (meth)acrylate, ceryl (meth)acrylate, octacosyl (meth)acrylate, myricyl (meth)acrylate, dotriacontyl (meth)acrylate and 2-decyltetradecyl (meth)acrylate.

The monomer units (a) represented by Formula (1) may be used alone or two or more thereof may be used in combination. The crystalline vinyl resin may have other units in addition to the monomer unit (a). As a method of introducing other units to the crystalline vinyl resin, for example, a method of polymerizing (meth)acrylic acid ester that can form the above monomer unit (a) with other vinyl monomers is exemplified.

Examples of the other vinyl-based monomer include the following:
(Meth)acrylic acid esters such as styrene, α-methylstyrene, methyl (meth)acrylate, ethyl (meth)acrylate, n-butyl (meth)acrylate, t-butyl (meth)acrylate, 2-ethylhexyl (meth)acrylate, and lauryl (meth)acrylate.
Monomers having a nitrile group: for example, acrylonitrile and methacrylonitrile.
Monomers having a urea group: for example, a monomer obtained by reacting an amine having 3 to 22 carbon atoms [a primary amine (such as normal-butylamine, t-butylamine, propylamine, and isopropylamine), a secondary amine (such as di-normal-ethylamine, di-normal-propylamine, and di-normal-butylamine), aniline, cycloxylamine, and the like] with an isocyanate having 2 to 30 carbon atoms having an ethylenically unsaturated bond by a known method.
Monomers having a carboxy group; for example, methacrylic acid, acrylic acid, and 2-carboxyethyl (meth)acrylate.
Monomers having a hydroxy group; for example, 2-hydroxyethyl (meth)acrylate, 2-hydroxypropyl (meth)acrylate, etc.
Monomers having an amide group; for example, acrylamide, and monomers obtained by reacting an amine having 1 to 30 carbon atoms with a carboxylic acid having 2 to 30 carbon atoms and having an ethylenically unsaturated bond (acrylic acid, methacrylic acid, etc.) by a known method.
Monomers having a lactam structure; for example, N-vinyl-2-pyrrolidone.

Among these, it is preferable to use at least one selected from the group consisting of acrylonitrile and methacrylonitrile, which are monomers having a nitrile group, and N-vinyl-2-pyrrolidone, which is a monomer having a lactam structure. That is, the crystalline vinyl resin preferably has a monomer unit based on at least one selected from the group consisting of acrylonitrile, methacrylonitrile and N-vinyl-2-pyrrolidone. The nitrile group and the lactam structure have high affinity with paper, and easily improve the adhesiveness between the toner and the paper. Therefore, the low-temperature fixability and the image robustness are more likely to be improved.

The monomer unit based on acrylonitrile or methacrylonitrile is represented by the following Formula (Ac). In addition, the monomer unit based on N-vinyl-2-pyrrolidone is represented by the following Formula (N).
In Formula (Ac), R₃ is a hydrogen atom or a methyl group, and R₄ is a nitrile group.

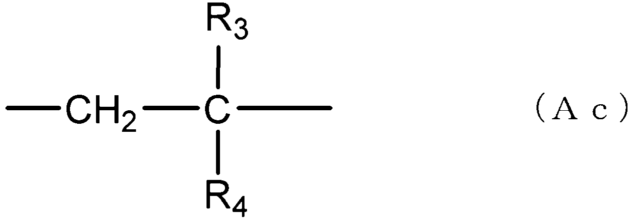

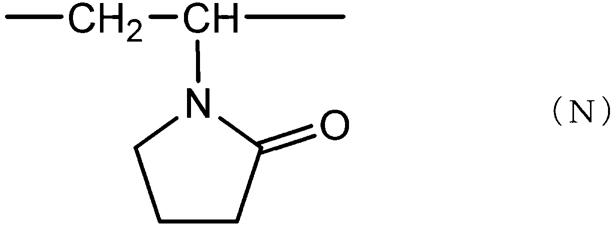

The content of the monomer unit (a) in the crystalline vinyl resin is preferably 20.0 to 90.0 mass%, more preferably 25.0 to 85.0 mass%, and still more preferably 40.0 to 80.0 mass%. Within this range, the balance between the low-temperature fixability and the heat-resistant storage stability becomes better.

The crystalline vinyl resin preferably contains 1.0 to 25.0 mass% and more preferably contains 3.0 to 20.0 mass% of a monomer unit based on at least one selected from the group consisting of acrylonitrile, methacrylonitrile and N-vinyl-2-pyrrolidone.
The crystalline vinyl resin preferably contains 5.0 to 40.0 mass% and more preferably contains 10.0 to 30.0 mass% of a monomer unit based on styrene.
The crystalline vinyl resin preferably contains 1.0 to 20.0 mass% and more preferably 2.0 to 10.0 mass% of a monomer unit based on n-butyl (meth)acrylate.

The crystalline vinyl resin can be obtained, for example, by copolymerizing a (meth)acrylic acid ester for introducing the monomer unit (a) and other vinyl monomers. The obtained crystalline vinyl resin can be used as a precursor, and additionally reacted with other vinyl monomers according to a hydrogen abstraction reaction.

The hydrogen abstraction reaction is a reaction in which a radical is generated by abstracting a hydrogen atom bonded to a carbon atom, and the generated radical can be additionally reacted with other vinyl monomers. Thereby, the monomer unit (a) in the crystalline vinyl resin can form a more aggregated state within the molecule, and the crystallinity can be easily increased.

In the crystalline vinyl resin, the weight average molecular weight (Mw) of the tetrahydrofuran (THF)-soluble fraction measured through gel permeation chromatography (GPC) is, for example, from 25,000 to 300,000, and preferably from 30,000 to 300,000. When the Mw is within this range, it is easier to adjust the melting point of the crystalline vinyl resin for exhibiting the low-temperature fixability to be within an appropriate range. The Mw is in a range of preferably from 40,000 to 250,000, and more preferably from 60,000 to 200,000.

The storage modulus of the crystalline vinyl resin at 80 °C is preferably 1.0×10³ to 1.0×10⁶ Pa. Within this range, the viscosity during fixing is likely to be improved, and the low-temperature fixability is more likely to be improved. The storage modulus of the crystalline vinyl resin at 80 °C is more preferably 1.0×10⁴ to 1.0×10⁶ Pa, and still more preferably 5.0×10⁴ to 8.0×10⁵ Pa.

The content of the crystalline vinyl resin in the binder resin is preferably 5.0 to 70.0 mass%, more preferably 10.0 to 70.0 mass%, still more preferably 15.0 to 70.0 mass%, yet more preferably 19.0 to 70.0 mass%, even more preferably 40.0 to 70.0 mass%, and particularly preferably 50.0 to 70.0 mass%. Within this range, the low-temperature fixability and the image robustness become better.

The amorphous resin will be described. The binder resin includes an amorphous resin. Examples of amorphous resins include an amorphous vinyl resin, an amorphous polyester resin, an amorphous polyurethane resin, and an amorphous epoxy resin. The amorphous resin includes, for example, at least one selected from the group consisting of an amorphous vinyl resin and an amorphous polyester resin. The amorphous resin preferably includes an amorphous vinyl resin. In addition, the amorphous resin preferably includes an amorphous polyester resin. The amorphous resin more preferably includes an amorphous vinyl resin and an amorphous polyester resin.

In the amorphous vinyl resin, vinyl monomers that can be used for the above crystalline vinyl resin can be used. As long as the amorphous vinyl resin does not exhibit crystallinity, a (meth)acrylic acid ester for introducing the monomer unit (a) can also be used.

In addition, so-called crosslinking agents having a plurality of vinyl groups per monomer can also be used. Examples of crosslinking agents include the following: diethylene glycol diacrylate, triethylene glycol diacrylate, tetraethylene glycol diacrylate, polyethylene glycol diacrylate, 1,6-hexanediol diacrylate, neopentyl glycol diacrylate, tripropylene glycol diacrylate, polypropylene glycol diacrylate, 2,2'-bis(4-(acryloxydiethoxy)phenyl)propane, trimethylolpropane triacrylate, tetramethylolmethane tetraacrylate, ethylene glycol dimethacrylate, diethylene glycol dimethacrylate, triethylene glycol dimethacrylate, tetraethylene glycol dimethacrylate, polyethylene glycol dimethacrylate, 1,3-butylene glycol dimethacrylate, 1,6-hexanediol dimethacrylate, neopentyl glycol dimethacrylate, polypropylene glycol dimethacrylate, 2,2'-bis(4-(methacryloxydiethoxy)phenyl)propane, 2,2'-bis(4-(methacryloxypolyethoxy)phenyl)propane, trimethylolpropane trimethacrylate, tetramethylolmethane tetramethacrylate, divinylbenzene, divinylnaphthalene, divinyl ether, and 4,4'-divinylbiphenyl.

The content of the amorphous vinyl resin in the amorphous resin is, for example, 45.0 mass% or more, preferably 50.0 mass% or more, and more preferably 55.0 mass% or more. Within this range, a network of the amorphous vinyl resin is easily formed in the fixed image, and the image robustness is more likely to be improved.
The content of the amorphous vinyl resin in the amorphous resin is, for example, 45.0 to 99.0 mass%, preferably 50.0 to 95.0 mass%, and more preferably 55.0 to 90.0 mass%.

In addition, the content of the amorphous vinyl resin in the binder resin is, for example, 10.0 to 75.0 mass%, preferably 10.0 to 60.0 mass%, more preferably 15.0 to 50.0 mass%, and still more preferably 17.0 to 45.0 mass%. Within this range, a network of the amorphous vinyl resin is easily formed in the fixed image, and the image robustness is more likely to be improved.

The glass transition temperature (Tg) of the amorphous vinyl resin is, for example, 47 to 85 °C, preferably 50 to 80 °C, and more preferably 55 to 75 °C. When the Tg is within this range, the amorphous vinyl resin is easily brought into an appropriately molten state during fixing, a network of the amorphous vinyl resin is easily formed, and the image robustness is more likely to be improved.

The toner preferably contains, as an amorphous resin, in addition to the amorphous vinyl resin, an amorphous polyester resin.
As the amorphous polyester resin, a condensation polymer of divalent or higher valency carboxylic acids and a polyhydric alcohol can be used.

Examples of polyvalent carboxylic acids include the following compounds:
dibasic acids such as succinic acid, adipic acid, sebacic acid, phthalic acid, isophthalic acid, terephthalic acid, malonic acid, and dodecenyl succinic acid, anhydrides thereof or lower alkyl esters thereof, and aliphatic unsaturated dicarboxylic acids such as maleic acid, fumaric acid, itaconic acid and citraconic acid; and trimellitic acid and anhydrides thereof, trimesic acid, pyromellitic acid, naphthalene tricarboxylic acid, or lower alkyl esters thereof. These may be used alone or two or more thereof may be used in combination.
The polyvalent carboxylic acids are preferably trimellitic acid and anhydrides thereof, isophthalic acid, and dodecenylsuccinic acid.

Examples of polyhydric alcohols include the following compounds:
alkylene glycol (ethylene glycol, 1,2-propylene glycol and 1,3-propylene glycol); alkylene ether glycol (polyethylene glycol and polypropylene glycol); alicyclic diol (1,4-cyclohexanedimethanol); bisphenol (bisphenol A); alkylene oxides of alicyclic diols (ethylene oxide and propylene oxide) adducts. The alkyl moieties of alkylene glycol and alkylene ether glycol may be linear or branched. In addition, examples thereof include glycerin, trimethylolethane, trimethylolpropane, and pentaerythritol. These may be used alone or two or more thereof may be used in combination.

The polyvalent alcohol is preferably a 1 to 5 mole adduct of alkylene oxide (ethylene oxide and/or propylene oxide) of bisphenol A.
Here, in order to adjust the acid value and the hydroxyl value, as necessary, monovalent acids such as acetic acid and benzoic acid, and monovalent alcohols such as cyclohexanol and benzyl alcohol can also be used.

Among these, it is preferable to use trimellitic acid and anhydrides thereof. The amorphous polyester resin preferably has a monomer unit based on at least one monomer selected from the group consisting of trimellitic acid and trimellitic anhydride. The monomer unit has a structure formed by condensation polymerization of at least one selected from the group consisting of trimellitic acid and trimellitic anhydride. When the amorphous polyester resin has this monomer unit, it is easier to adjust the crystalline phase and the amorphous phase in the region A and the region B to be within an appropriate range.

The amorphous polyester resin may contain preferably 0.1 to 5 mass%, and more preferably 0.5 to 2.0 mass% of a monomer unit based on at least one monomer selected from the group consisting of trimellitic acid and trimellitic anhydride. The content (mol%) is preferably 0.1 to 5 mol%, and more preferably 1.0 to 2.5 mol%.

The amorphous polyester resin preferably contains a monomer unit represented by the following Formula (2) (for example, an alkenyl succinic acid unit).

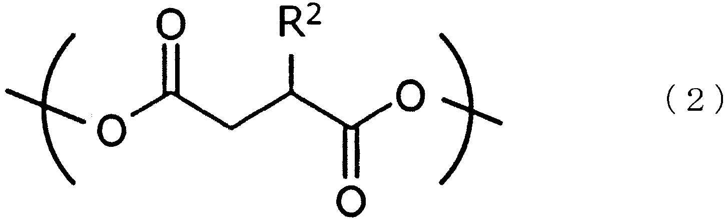

In Formula (2), R² is an alkyl group or alkenyl group having 8 to 16 carbon atoms, and more preferably a dodecenyl group.
When the amorphous polyester resin has a monomer unit represented by Formula (2), it becomes easier to form an interaction with the crystalline vinyl resin having a long-chain alkyl group. Therefore, in the fixed image, bonding between crystalline vinyl resins is weakened, and formation of a network of the crystalline vinyl resin is easily inhibited. As a result, the image robustness is more likely to be improved.

Therefore, among dibasic acids that can be used for the above amorphous polyester resin, dodecenylsuccinic acid is preferably used to produce an amorphous polyester resin.
The content of the monomer unit represented by Formula (2) in the amorphous polyester resin is preferably 3 to 30 mass%, and more preferably 5 to 20 mass%. The content (mol%) is preferably 0.3 to 30 mol%, and more preferably 8 to 20 mol%.

The method of producing a polyester resin is not particularly limited, and for example, a transesterification method and a direct polycondensation method can be used alone or in combination.

In addition, the content of the amorphous polyester resin in the binder resin is, for example, 0.6 to 20.0 mass%, preferably 1.0 to 15.0 mass%, more preferably 2.0 to 15.0 mass%, and still more preferably 3.0 to 15.0 mass%. Within this range, a network of the amorphous resin is easily formed in the fixed image, and the image robustness is more likely to be improved.

The toner particle may contain a core containing a crystalline vinyl resin and an amorphous vinyl resin and a shell covering the core as long as the proportions of the crystalline phase and the amorphous phase in the region A and the region B are within the above desired range. The resin forming the shell is preferably an amorphous polyester resin. The toner particle preferably has a shell formed of an amorphous polyester resin.

The shell does not necessarily cover the entire core, and some part of the core may be exposed. When the shell formed of the amorphous polyester resin is provided, the heat-resistant storage stability is more likely to be improved. In addition, when the shell formed of the amorphous polyester resin having units derived from trimellitic acid and trimellitic anhydride is provided, the adhesiveness to paper is likely to be improved, and the image robustness is more likely to be improved.

The number average particle diameter of the toner is, for example, 4.0 to 12.0 µm, and preferably 4.0 to 10.0 µm. Within this range, the low-temperature fixability and the image robustness is more likely to be improved. The number average particle diameter of the toner is more preferably 4.5 to 9.0 µm, and still more preferably 5.0 to 8.0 µm.

The toner may contain a wax. The wax is preferably at least one selected from the group consisting of a hydrocarbon wax and an ester wax. When a hydrocarbon wax and/or an ester wax is used, it is easier to secure an effective release property.

The hydrocarbon wax is not particularly limited, and examples thereof include the following:
aliphatic hydrocarbon waxes: low-molecular-weight polyethylene, low-molecular-weight polypropylene, low-molecular-weight olefin copolymers, Fischer-Tropsch wax, and waxes obtained by oxidizing or adding acids to these waxes.

The ester wax may be any wax having at least one ester bond in one molecule, and either a natural ester wax or a synthetic ester wax may also be used.
The ester wax is not particularly limited, and examples thereof include the following:
esters of monohydric alcohols and monocarboxylic acids such as behenyl behenate, stearyl stearate, and palmityl palmitate;
esters of divalent carboxylic acids and monoalcohols such as dibehenyl sebacate;
esters of divalent alcohols and monocarboxylic acids such as ethylene glycol distearate and hexanediol dibehenate;
esters of trihydric alcohols and monocarboxylic acids such as glycerin tribehenate;
esters of tetrahydric alcohols and monocarboxylic acids such as pentaerythritol tetrastearate, and pentaerythritol tetrapalmitate;
esters of hexahydric alcohols and monocarboxylic acids such as dipentaerythritol hexastearate, dipentaerythritol hexapalmitate, and dipentaerythritol hexabehenate;
esters of polyfunctional alcohols and monocarboxylic acids such as polyglycerin behenate; and natural ester waxes such as carnauba wax and rice wax.

Among these, the wax preferably includes an ester wax which is an ester of a tetra-to octa-valent alcohol and an aliphatic monocarboxylic acid or a wax which is an ester of a tetra- to octa-valent carboxylic acid and an aliphatic monoalcohol. When such a wax is contained, the compatibility with the crystalline vinyl resin during fixing is reduced, and thus it is easier to improve a release property during fixing at low temperatures and to improve the low-temperature fixability.

In addition, esters of tetrahydric alcohols and monocarboxylic acids such as pentaerythritol tetrastearate, pentaerythritol tetrapalmitate, and pentaerythritol tetrabehenate, esters of hexahydric alcohols and monocarboxylic acids such as dipentaerythritol hexastearate, dipentaerythritol hexapalmitate, and dipentaerythritol hexabehenate, and esters of octahydric alcohols and monocarboxylic acids such as tripentaerythritol octastearate, tripentaerythritol octapalmitate, and tripentaerythritol octabehenate are more preferable.

The content of the wax in the toner particle is preferably 1.0 to 30.0 mass%, more preferably 2.0 to 25.0 mass%, still more preferably 2.0 to 12.0 mass%, and yet more preferably 3.0 to 10.0 mass%. When the content of the wax in the toner particle is within the above range, it is easier to secure a release property during fixing.

The melting point of the wax is preferably from 60 °C to 120 °C. When the melting point of the wax is the above range, the wax melts during fixing and easily exudes onto the surface of the toner particles, and a release property is likely to be exhibited by the wax. The melting point of the wax is more preferably from 70 °C to 100 °C.

The toner may contain a colorant. Examples of colorants include known organic pigments, organic dyes, inorganic pigments, carbon black as a black colorant, and magnetic particles. Other colorants that are conventionally used in toners may also be used.
Examples of yellow colorants include the following: condensed azo compounds, isoindolinone compounds, anthraquinone compounds, azo metal complexes, methine compounds, and arylamide compounds. Specifically, C.I. Pigment yellow 12, 13, 14, 15, 17, 62, 74, 83, 93, 94, 95, 109, 110, 111, 128, 129, 147, 155, 168, and 180 are preferably used.

Examples of magenta colorants include the following: condensed azo compounds, diketopyrrolopyrrole compounds, anthraquinone compounds, quinacridone compounds, basic dye lake compounds, naphthol compounds, benzimidazolone compounds, thioindigo compounds, and perylene compounds. Specifically, C.I. Pigment red 2, 3, 5, 6, 7, 23, 48: 2, 48: 3, 48: 4, 57: 1, 81: 1, 122, 144, 146, 166, 169, 177, 184, 185, 202, 206, 220, 221, and 254 are preferably used.
Examples of cyan colorants include the following: copper phthalocyanine compounds and their derivatives, anthraquinone compounds, and basic dye lake compounds. Specifically, C.I. Pigment blue 1, 7, 15, 15: 1, 15: 2, 15: 3, 15: 4, 60, 62, and 66 preferably used.

The colorant is selected in consideration of the hue angle, chroma, lightness, lightfastness, OHP transparency, and dispersibility in the toner.
The content of the colorant with respect to 100.0 parts by mass of the binder resin is preferably 1.0 to 20.0 parts by mass, and more preferably 2.0 to 10.0 parts by mass. When magnetic particles are used as the colorant, the content thereof with respect to 100.0 parts by mass of the binder resin is preferably 40.0 to 150.0 parts by mass.

As necessary, the toner particles may contain a charge control agent. In addition, the charge control agent may be externally added to the toner particles. When the charge control agent is added, charging characteristics can be stabilized, and an optimal triboelectric charge quantity can be controlled according to the development system.
As the charge control agent, known agents can be used, and a charge control agent which exhibits a high charging speed and can stably maintain a certain charge quantity is particularly preferable.

Examples of charge control agents that control the toner to be negatively charged include the following:
organometallic compounds and chelate compounds are effective, and examples thereof include monoazo metallic compounds, acetylacetone metallic compounds, and aromatic oxycarboxylic acid-based, aromatic dicarboxylic acid-based, oxycarboxylic acid-based and dicarboxylic acid-based metallic compounds.
Examples of charge control agents that control the toner to be positively charged include the following:
   nigrosine, quaternary ammonium salts, metal salts of higher fatty acids, diorganotin borates, guanidine compounds, and imidazole compounds.
   The content of the charge control agent with respect to 100.0 parts by mass of the toner particles is preferably 0.01 to 20.0 parts by mass, and more preferably 0.5 to 10.0 parts by mass.

The toner particles may be directly used as a toner, or may be used as a toner after an external additive or the like is mixed as necessary, and adhered to the surface of the toner particles.
Examples of external additives include inorganic fine particles selected from the group consisting of silica fine particles, alumina fine particles, and titania fine particles or complex oxides thereof. Examples of complex oxides include silica aluminum fine particles and strontium titanate fine particles.
The content of the external additive with respect to 100 parts by mass of the toner particles is preferably 0.01 to 8.0 parts by mass and more preferably 0.1 to 4.0 parts by mass.

The toner particle may be produced by any known method such as a suspension polymerization method, an emulsion aggregation method, a dissolution suspension method, or a pulverization method within the scope of the present invention, and is preferably produced by a suspension polymerization method.

The toner particles are preferably suspension-polymerized toner particles The suspension polymerization method will be described in detail.
For example, a crystalline vinyl resin synthesized in advance is added to a mixture of polymerizable monomers that can form an amorphous resin (for example, an amorphous vinyl resin). As necessary, other materials such as an amorphous polyester resin, a colorant, a wax, and a charge control agent are added, and uniformly dissolved or dispersed to prepare a polymerizable monomer composition.

Then, the polymerizable monomer composition is dispersed in an aqueous medium using a stirrer or the like to prepare suspended particles of the polymerizable monomer composition. Then, the polymerizable monomers contained in the particles are polymerized using an initiator or the like to obtain toner particles.
During this polymerization reaction, by utilizing a hydrogen abstraction reaction, a certain amount of each polymerizable monomer is reacted with the crystalline vinyl resin polymerized in advance, and the crystalline vinyl resin can be easily controlled to have desired physical properties.

After the polymerization is completed, the toner particles are filtered, washed, and dried by known methods, and as necessary, an external additive may be added to obtain a toner.

As the polymerization initiator, known polymerization initiators can be used.
Examples thereof include azo-based or diazo-based polymerization initiators such as 2,2'-azobis-(2,4-dimethylvaleronitrile), 2,2'-azobisisobutyronitrile, 1,1'-azobis(cyclohexane-1-carbonitrile), 2,2'-azobis-4-methoxy-2,4-dimethylvaleronitrile, and azobisisobutyronitrile; and peroxide-based polymerization initiators such as benzoyl peroxide, t-butyl peroxy 2-ethylhexanoate, t-butyl peroxypivalate, t-butyl peroxyisobutyrate, t-butyl peroxyoctoate, t-butyl peroxyneodecanoate, methyl ethyl ketone peroxide, diisopropyl peroxycarbonate, cumene hydroperoxide, 2,4-dichlorobenzoyl peroxide, and lauroyl peroxide.

The polymerization initiators which are likely to cause a hydrogen abstraction reaction are peroxide-based polymerization initiators, and are preferably used. Among these, initiators such as t-butyl peroxy 2-ethylhexanoate, t-butyl peroxypivalate, t-butyl peroxyisobutyrate, t-butyl peroxyoctoate, and t-butyl peroxyneodecanoate are more preferably used.

The temperature of the polymerization reaction is preferably from 15 °C to 25 °C relative to the 10-hour half-life temperature of the initiator. Within the above range, the hydrogen abstraction reaction easily occurs appropriately, and the crystalline vinyl resin can be easily controlled to have desired physical properties.
In addition, known chain transfer agents and polymerization inhibitors may also be used.

The aqueous medium may contain an inorganic or organic dispersion stabilizer. As the dispersion stabilizer, known dispersion stabilizers can be used.
Examples of inorganic dispersion stabilizers include phosphates such as hydroxyapatite, tricalcium phosphate, dicalcium phosphate, magnesium phosphate, aluminum phosphate, and zinc phosphate; carbonates such as calcium carbonate and magnesium carbonate; metal hydroxides such as calcium hydroxide, magnesium hydroxide, and aluminum hydroxide; sulfates such as calcium sulfate and barium sulfate; calcium metasilicate; bentonite; silica; and alumina.

On the other hand, examples of organic dispersion stabilizers include polyvinyl alcohol, gelatin, methyl cellulose, hydroxypropyl methylcellulose, ethyl cellulose, sodium salts of carboxymethylcellulose, polyacrylic acid and its salts, and starch.

When an inorganic compound is used as a dispersion stabilizer, a commercially available product may be used without change, but in order to obtain finer particles, the inorganic compound that is produced in an aqueous medium may also be used.
For example, in the case of calcium phosphate such as hydroxyapatite or tricalcium phosphate, a phosphate aqueous solution and a calcium salt aqueous solution may be mixed under high-speed stirring.

The aqueous medium may contain a surfactant. As the surfactant, known surfactants can be used. Examples thereof include anionic surfactants such as sodium dodecylbenzene sulfate and sodium oleate; cationic surfactants; amphoteric surfactants; and nonionic surfactants.

The calculation methods and measurement methods for various physical properties of toners and toner materials will be described below.

### Method of Obtaining Cross-sectional Image of Toner Particle Using Scanning Transmission Electron Microscope (STEM)

The presence state of the crystalline phase and the amorphous phase in the cross section of the toner is confirmed by observing the cross section of the toner using a scanning transmission electron microscope. The cross section of the toner is observed after ruthenium staining is performed. That is, the cross-sectional image of the toner particle according to the present disclosure is a cross-sectional image of the toner particle stained with ruthenium.

The procedure of observing the cross section of the toner is as follows.
The toner is embedded in a visible light-curable resin (D-800, commercially available from Nisshin-EM) such that it is dispersed as much as possible, and cut to a thickness of 100 nm using an ultrasonic ultramicrotome (UC7, commercially available from Leica Biosystems).

The obtained thin sample is stained using a vacuum staining device (VSC4R1H, commercially available from Filgen, Inc.) in an RuO₄ gas atmosphere at 500 Pa for 15 minutes, and a STEM image is obtained using a scanning transmission electron microscope (JEM2800, commercially available from JEOL). Under the above staining conditions, the degree of staining differs between the crystalline resin and the amorphous resin, and the presence state of the crystalline phase and the amorphous phase can be confirmed by the contrast difference. A bright-field (STEM-BF) image is obtained when the observation conditions are set as follows: an acceleration voltage of 200 kV, a STEM probe size of 1 nm, an image size of 1,024×1,024 pixels, and a magnification of 30,000.

In this case, when selecting toner particles for obtaining a cross-sectional image, the number average particle diameter of the toner is measured by the measurement method described below, and 10 toner particles with the major axis diameter that is 0.8 to 1.1 times the number average particle diameter are then selected. In addition, an image is obtained so that no more than two toner particles appear in the field of view of a single image.

### Method of Measuring Proportion of Amorphous Phase in Entire Cross Section of Toner Particle, Proportion of Area of Amorphous Phase in Region A, Proportion of Area of Crystalline Phase in Region B, and Proportion of Area of Crystalline Phase in Region Other Than Region A

The area proportion is calculated by analyzing the STEM image of the cross section of the toner particle obtained by the above method using image processing software Image J (developer Wayne Rashand). A brightness histogram is used for calculation. The brightness histogram is a brightness histogram obtained when a 256-gradation brightness spectrum is measured for an image obtained by image analysis of a cross section of the toner particle. FIG. 1 shows an example of a 256-gradation brightness histogram obtained from a cross-sectional image of a toner 1. A specific procedure is described below.

First, from Type in the Image menu, a bright-field image to be analyzed is converted into 8-bit.
Next, the scale of the image is set. The scale is set by Set Scale in the Analyze menu using a scale bar of the image. From Filters in the Process menu, a Median diameter is set to 2.0 pixels, and image noise is reduced.

Next, the analysis range is designated as a region inside the outline of the toner particle. Here, the outline of the toner particle is a boundary line at an interface between the visible light-curable resin and the cross section of the toner particle. The region outside the analysis range is erased by Clear Outside in the Edit menu.

An area of the entire cross section of the toner particle is calculated by Measure in the Analyze menu.
Next, the area proportion of the amorphous phase in the entire cross section of the toner particle is calculated. When Histogram in the Analyze menu is selected, a brightness histogram having two peaks derived from the crystalline phase and the amorphous phase is displayed. List is displayed, and a value V of a pixel value when the pixel count is smallest between two peaks is confirmed. FIG. 1 shows an example of the value V.

In the present disclosure, the crystalline phase and the amorphous phase are defined as follows. A STEM image of the cross section of the toner particle is analyzed using image processing software to obtain a 256-gradation brightness histogram. In the obtained brightness histogram, a value of a pixel value at a position where the pixel count is smallest between the peak of the crystalline resin and the peak of the amorphous resin is defined as a value V.
In the cross section of the toner particle, a part having a pixel value corresponding to a brightness of a value V or more and 255 or less is an "an amorphous phase containing an amorphous resin as a main component."
In addition, in the cross section of the toner particle, a part having a pixel value corresponding to a brightness of 0 or more and less than the value V is "a crystalline phase containing a crystalline resin as a main component."

Threshold is selected from adjust in the Image menu, the position of the upper bar is set to the value V of the pixel value confirmed above, the position of the lower bar is set to 255 (maximum), and by selecting apply, only the amorphous phase part is selected. The total area of the amorphous phase is calculated by checking Summarize in Analyze Particles in the Analyze menu. When the total area of the amorphous phase is divided by the area of the entire cross section, the area proportion of the amorphous phase in the entire cross section of the toner particle is calculated.

Next, the total area of the region A is calculated. When the region inside the outline of the toner particle is selected, ROI Manager is opened from Tools in the Analyze menu, and Add is selected to add the region inside the outline of the toner particle. When the region inside the outline of the toner particle is selected, Enlarge under Selection is selected from the Edit menu, and -700 nm is input to select a region having a new outline located 700 nm inside from the outline of the toner particle. This region is added to the ROI Manager by selecting Add.
In the ROI Manager, the region inside the outline of the toner particle and the region having a new outline located 700 nm inside from the outline of the toner particle are both selected, and by selecting XOR, only the region A is designated as the analysis range. This region is added to the ROI Manager by selecting Add, and the region outside the analysis range is erased by Clear Outside in the Edit menu. The total area of the region A is calculated by Measure in the Analyze menu.

Next, the area of the amorphous phase of the region A is calculated. Threshold is selected from Adjust in the Image menu, the position of the upper bar is set to the value V of the pixel value confirmed above, the position of the lower bar is set to 255, and by selecting apply, only the amorphous phase part is selected. The area of the amorphous phase in the region A is calculated by checking Summarize in Analyze Particles in the Analyze menu.

The area of the amorphous phase in the region A is divided by the total area of the amorphous phase in the entire cross section of the toner particle to calculate the area proportion of the amorphous phase in the region A within the amorphous phase present in the entire cross-section of the toner particle. In addition, the area of the amorphous phase in the region A is divided by the total area of the region A to calculate the area proportion of the amorphous phase in the region A.

In the same procedure as described above, Enlarge is selected and -200 nm is input, and thus the region B located 200 nm inside from the outline of the toner particle can be selected.
Then, the total area of the region B and the area of the amorphous phase in the region B are calculated. The area of the amorphous phase in the region B is subtracted from the total area of the region B to calculate the area of the crystalline phase in the region B. Then, the area of the crystalline phase in the region B is divided by the total area of the region B to calculate the area proportion of the crystalline phase in the region B.

Next, the area proportion of the crystalline phase in the region other than the region A is calculated as follows.
In the designation of the region A, in the ROI Manager in which the region located 700 nm inside from the outline of the toner is added, the region outside the analysis range is erased by Clear Outside in the Edit menu, and thus the region other than the region A is designated. From Measure in the Analyze menu, the total area of the region other than the region A is calculated.
In addition, the area of the amorphous phase in the region other than the region A is calculated in the same method as in the area proportion of the amorphous phase in the region A. Then, the area of the amorphous phase is subtracted from the total area of the region other than the region A to calculate the area of the crystalline phase in the region other than the region A. In addition, the area proportion of the crystalline phase in the region other than the region A can be calculated from the obtained total area of the region other than the region A and area of the crystalline phase.

The same image analysis is performed on 10 STEM images for each toner, and the values of the area proportions are calculated. The arithmetic average value of the values of the obtained 10 images is used.

### Principle of Ruthenium Staining

When the cross section of the toner particle is subjected to ruthenium staining, a crystalline resin component is stained with ruthenium more strongly than an amorphous resin component so that the contrast becomes clear and the cross section of the toner particle is easily observed. This is because RuO₄ has strong oxidizing power and oxidizes long-chain alkyl or alkylene groups that improve crystallinity, and as a result, the crystalline resin component is stained more strongly than the amorphous resin component.

In addition, as the crystallinity of the resin component is higher, there is a larger amount of ruthenium atoms, and the more ruthenium atoms present, the less electron beams can pass through. Therefore, a resin component with higher crystallinity appears to be stained more strongly in electron microscope observation images. On the other hand, the amorphous resin component appears to be weakly stained or not stained at all. Thus, it can be determined that the strongly stained part is a part containing a crystalline resin, and the weakly stained part or the unstained part is a part containing an amorphous resin.

### Method of Measuring Number Average Particle Diameter

The number average particle diameter of the toner is calculated as follows. The measurement device used is a particle counting and analysis device "CDA-1000X" with a 100 µm aperture tube using a pore electrical resistance method (commercially available from Sysmex Corporation). The measurement conditions are set and measurement data is analyzed using bundled dedicated software "CDA-1000X (commercially available from Sysmex Corporation)."
As the electrolyte aqueous solution used for the measurement, for example, "Cellpack" (commercially available from Sysmex Corporation) can be used.

Here, before performing the measurement and analysis, dedicated software is set as follows.
On the "measurement condition setting" screen of the dedicated software, the total count number is set to 50,000, the number of repeated measurements is set to 1, and the measurement mode is set to the total count (no limit).
A specific measurement method is as follows.
(1) 150 mL of an electrolyte aqueous solution is put into a special glass round-bottom beaker, which is set on a sample stage, and stirred with a stirring propeller at 500 rpm. Then, the user clicks "blank check measurement" on the dedicated software to start the measurement, and confirms that the count number is less than 500. When the count number is 500 or more, the beaker and the aperture are washed repeatedly.
(2) 30 mL of the electrolyte aqueous solution is put into a 100 mL flat-bottomed glass beaker. 0.3 ml of a diluted solution prepared by diluting "Contaminon N" (a 10 mass% aqueous solution of a neutral detergent with pH 7 for washing precision measurement instruments, containing a nonionic surfactant, an anionic surfactant, and an organic builder, commercially available from Wako Pure Chemical Industries, Ltd.) threefold by weight with deionized water is added as a dispersing agent thereto.
(3) An ultrasonic disperser with an electrical output of 120 W "Ultrasonic Dispension System Tetra150" (commercially available from Nikkaki Bios Co., Ltd.), which incorporates two oscillators with an oscillation frequency of 50 kHz and with phases shifted by 180 degrees, is prepared. 3.3 L of deionized water is put into a water tank of the ultrasonic disperser, and 2 ml of Contaminon N is added to this water tank.
(4) The beaker in (2) is set in a beaker fixing hole of the ultrasonic disperser, and the ultrasonic disperser is operated. Then, the height position of the beaker is adjusted so that the resonance state of the liquid surface of the electrolyte aqueous solution in the beaker is maximized.
(5) While ultrasonic waves are emitted to the electrolyte aqueous solution in the beaker in (4), 10 mg of the toner is added little by little and dispersed. In addition, an ultrasonic dispersion treatment is additionally continued for 60 seconds. Here, during ultrasonic dispersion, the water temperature in the water tank is appropriately adjusted to be from 10 °C to 40 °C.
(6) In the round-bottom beaker in (1) placed in the sample stand, the electrolyte aqueous solution in (5) in which the toner is dispersed using a pipette is added dropwise, and the measurement concentration is adjusted to 6%. Then, the measurement is performed until the number of particles measured reaches 50,000.
(7) The measurement data is analyzed using device bundled dedicated software, and the number average particle diameter is calculated.

### Separation of Crystalline Vinyl Resin, Amorphous Vinyl Resin, Amorphous Polyester Resin and Wax from Toner, and Measurement of Contents Thereof

1.5 g of a toner is weighed out and put into a cylindrical filter paper (product name: No.86R, size 28×100 mm, commercially available from Advantec Co., Ltd.), which is set in a Soxhlet extractor. Extraction is performed for 18 hours using 200 mL of chloroform as a solvent, and in this case, extraction is performed at a reflux rate such that the solvent extraction cycle is once every 5 minutes. Chloroform is sufficiently distilled off from the extracted chloroform-soluble fraction using an evaporator, and a mixture of the resin component such as a binder resin and a wax, which are chloroform-soluble fractions, is separated from the toner.

The binder resin and the wax are separated by recycling HPLC, and a component with a molecular weight of 2,000 or less is separated as the wax. The measurement method is as follows. First, a mixture of a resin component and a wax is dissolved in chloroform by the above method. Then, the obtained solution is filtered through a solvent-resistant membrane filter with a pore size of 0.2 µm Maishori Disc" (commercially available from Tosoh Corporation) to obtain a sample solution. Here, the sample solution is adjusted so that the concentration of components soluble in chloroform is 1.0 mass%. The sample solution is used for measurement under the following conditions.
·Device: LC-Sakura NEXT (commercially available from Japan Analytical Industry Co., Ltd.)
·Column: JAIGEL2H, 4H (commercially available from Japan Analytical Industry Co., Ltd.)
·Eluent: chloroform
·Flow rate: 10.0 ml/min
·Oven temperature: 40.0 °C
·Sample injection amount: 1.0 ml
In the calculation of the molecular weight of the sample, a molecular weight calibration curve created using a standard polystyrene resin (for example, product name "TSK standard polystyrene F-850, F-450, F-288, F-128, F-80, F-40, F-20, F-10, F-4, F-2, F-1, A-5000, A-2500, A-1000, A-500," commercially available from Tosoh Corporation) is used.

From the molecular weight curve thus obtained, components having a molecular weight of 2,000 or less are repeatedly separated, and the binder resin and the wax can be separated.
The separation of the crystalline vinyl resin, the amorphous vinyl resin, and the amorphous polyester resin from the binder resin can be performed by the following method using a gradient polymer LC.

The binder resin separated by the above method is used as a sample, the sample concentration is adjusted to 1.0 mass% with chloroform, and the solution is filtered through a 0.45 µm PTFE filter and then subjected to measurement. Gradient polymer LC measurement conditions are as follows.
Device: UITIMATE3000 (commercially available from Thermo Fisher Scientific)
Mobile phase: A chloroform (HPLC), B acetonitrile (HPLC)
Gradient: 2 min (A/B=0/100)-25 min (A/B=100/0)
(here, the gradient of change in the mobile phase is linear)
Flow rate: 1.0 mL/min
Injection: 1.0 mass%×20 µL
Column: Tosoh TSKgel ODS (4.6 mmφ x 150 mm x 5 µm)
Column temperature: 40 °C
Detector: Corona charged particle detector (Corona-CAD) (commercially available from Thermo Fisher Scientific)

In a time-signal intensity (µA) graph obtained from the measurement, the binder resin can be separated into three peaks according to polarity. Then, the above measurement is repeated again, separation is performed at times corresponding to valleys of respective peaks, and thus separation into three types of resins can be performed. The separated resins are subjected to composition analysis by the following method, and thus a crystalline vinyl resin, an amorphous vinyl resin and an amorphous polyester resin are identified. When the masses of the separated resins are measured, the contents of the crystalline vinyl resin, the amorphous vinyl resin and the amorphous polyester resin in the binder resin are calculated.
In addition, the content of the amorphous vinyl resin in the amorphous resin can also be calculated. The crystalline vinyl resin, the amorphous vinyl resin, and the amorphous polyester resin separated by these procedures can be used to perform the following analysis.

### Composition Analysis Method for Monomer Unit (a) of Crystalline Vinyl Resin, Amorphous Vinyl Resin, and Monomer Unit Represented by Formula (2) of Amorphous Polyester Resin

The monomer unit (a) of the crystalline vinyl resin, the amorphous vinyl resin, and the monomer unit represented by Formula (2) of the amorphous polyester resin are subjected to composition analysis through ¹H-NMR or ¹³C-NMR under the following conditions. The crystalline vinyl resin will be described as an example. The crystalline vinyl resin separated by the above method can be used as a measurement sample.
Measurement device: FT NMR device JNM-EX400 (commercially available from JEOL Ltd.)
Measurement frequency: 400 MHz
Pulse condition: 5.0 µs
Frequency range: 10,500 Hz
Cumulative number of measurements: 64
Measurement temperature: 30 °C
Sample: 50 mg of the measurement sample is put into a sample tube with an inner diameter of 5 mm, deuterated chloroform (CDCl₃) is added as a solvent, and the sample is dissolved in a thermostatic chamber at 40 °C for preparation. The obtained ¹H-NMR chart is analyzed and the structure of each unit is identified. Here, as an example, the measurement of the content of the monomer unit (a) in the crystalline vinyl resin and the number of carbon atoms in the alkyl group will be described.
In the obtained ¹H-NMR chart, among peaks attributed to components of the monomer unit (a), a peak independent of peaks attributed to components of other monomer units is selected, and the integral value S1 of this peak is calculated. Integral values of the other units contained in the crystalline vinyl resin are calculated in the same manner.

For example, when the monomer units constituting the crystalline vinyl resin are the monomer unit (a) and one other monomer unit, the content of the monomer unit (a) is determined using the integral value S1 and the integral value S2 of the peak of the other monomer unit as follows. Here, n1 and n2 are the number of hydrogen atoms in the components to which the peak of interest for each site belongs. $The content of the monomer unit \left(a\right) \left(mol%\right) = \left\{\left(S1/n1\right)/\left(\left(S1/n1\right)+\left(S2/n2\right)\right)\right\} \times 100$ When there are two or more types of other monomer units, the content of the monomer unit (a) can be calculated in the same manner (using S3···Sx, n3···nx)

In addition, the number of carbon atoms in the alkyl group can be calculated from the integral ratio of proton peaks in the ¹H-NMR chart.
Here, when a polymerizable monomer that does not contain hydrogen atoms in the components other than the vinyl group is used, the measurement nucleus is set to ¹³C using ¹³C-NMR, measurement is performed in a single pulse mode, and calculation is performed in the same manner using ¹H-NMR.

The proportion (mol%) of each monomer unit calculated by the above method is multiplied by the molecular weight of each monomer unit to convert the content of each monomer unit into mass%. Accordingly, the content (proportion J) of the monomer unit (a) in the crystalline vinyl resin based on the mass of the crystalline vinyl resin is calculated. For example, it can be calculated by the following formula.
[the content of the monomer unit (a) based on the mass of the crystalline vinyl resin: the proportion J (unit: mass%) (the molecular weight of the monomer unit (a):M1, the molecular weight of other monomer units:M2)] $Proportion J = \left\{\left(S1/n1\right)\times M1/\left(\left(S1/n1\right)\times M1+\left(S2/n2\right)\times M2\right)\right\} \times 100$ (7)

The amorphous vinyl resin and the amorphous polyester resin can be measured using the same method.

### Method of Measuring Melting Point Peak of Crystalline Vinyl Resin in Differential Scanning Calorimetry (DSC) Measurement of Toner

The melting point peak of the crystalline vinyl resin is measured using DSC Q2000 (commercially available from TA Instruments) under the following conditions.
Ramp rate: 10 °C/min
Measurement onset temperature: 20 °C
Measurement end temperature: 180 °C
The melting points of indium and zinc are used to correct the temperature of a device detection unit, and the heat of fusion of indium is used to correct the amount of heat.

Specifically, 5 mg of a toner is accurately weighed out and placed on an aluminum pan, and differential scanning calorimetry is performed. As a reference, an empty silver pan is used. In a heating process, the temperature is raised to 180 °C at a rate of 10 °C/min. Then, the peak temperature is calculated from each peak.
When the toner contains a wax, an endothermic peak derived from the wax may also be confirmed. In this case, by separately measuring the DSC of the wax separated by the above method, the endothermic peak of the wax can be identified, and the melting point peak derived from the crystalline vinyl resin can be identified.

### Method of Measuring Glass Transition Temperature (Tg) of Amorphous Vinyl Resin

The Tg of the amorphous vinyl resin is measured using DSC Q2000 (commercially available from TA Instruments) under the following conditions.
Ramp rate: 1°C/min
Measurement onset temperature: 20 °C
Measurement end temperature: 180 °C
Temperature amplitude range: measurement at a modulation of ±0.318 °C/min
The melting points of indium and zinc are used to correct the temperature of a device detection unit, and the heat of fusion of indium is used to correct the amount of heat.
Specifically, 5 mg of an amorphous vinyl resin is accurately weighed out and placed on an aluminum pan, and differential scanning calorimetry is performed. As a reference, an empty silver pan is used. From the reversing heat flow curve during heating, tangents are drawn between the endothermic curve and preceding/following baselines, and the midpoint of the straight line connecting the intersections of these tangents is defined as Tg.

### Measurement of Storage Modulus of Crystalline Vinyl Resin at 80 °C

The storage modulus is measured using MCR302 (commercially available from Anton Paar). The method of measuring the storage modulus of the crystalline vinyl resin at 80 °C will be described below.
120 mg of the crystalline vinyl resin is weighed out, and molding is performed using a tablet machine at 20 kN for 1 minute to obtain a disc-shaped sample with a diameter of 8 mm.
Using the obtained sample, under the following conditions, the sample is set in a measurement jig.
Measurement jig name: Measuring plate PP08/SD: 8 mm sandblasted
Setting conditions: 80 °C 0.1 N

Next, the viscoelasticity was measured under the following conditions.
Frequency: 1 Hz
Normal force: 100 mN
Applied strain: varied from 0.5% to 7.0% at 0.22%/min
The temperature is raised from 60 °C to 100 °C at 2 °C/min, and measurement is performed. The sampling pitch in this case is 1 point/0.5 minutes.
In the measurement, the calculated value of the storage modulus (Pa) at 80 °C is taken as the storage modulus of the crystalline vinyl resin at 80 °C.

### Method of Measuring Molecular Weight of Crystalline Vinyl Resin

The molecular weight (weight average molecular weight Mw) of the THF-soluble fraction of the crystalline vinyl resin is measured through gel permeation chromatography (GPC) as follows.
First, the crystalline vinyl resin is dissolved in tetrahydrofuran (THF) at room temperature for 24 hours. Then, the obtained solution is filtered through a solvent-resistant membrane filter with a pore size of 0.2 µm "Maishori Disc" (commercially available from Tosoh Corporation) to obtain a sample solution. Here, the sample solution is adjusted so that the concentration of the component soluble in THF is 0.8 mass%. The sample solution is used to perform measurement under the following conditions.
·Device: HLC8120 GPC (detector: RI) (commercially available from Tosoh Corporation)
·Column: seven connected Shodex KF-801, 802, 803, 804, 805, 806, 807 columns (commercially available from Showa Denko K.K.)
·Eluent: tetrahydrofuran (THF)
·Flow rate: 1.0 ml/min
·Oven temperature: 40.0 °C
·Sample injection amount: 0.10 ml
In the calculation of the molecular weight of the sample, a molecular weight calibration curve created using a standard polystyrene resin (for example, product name "TSK standard polystyrene F-850, F-450, F-288, F-128, F-80, F-40, F-20, F-10, F-4, F-2, F-1, A-5000, A-2500, A-1000, A-500," commercially available from Tosoh Corporation) is used.

### Examples

Examples and Comparative Examples are described below, but the present disclosure is not limited thereto. Various measurements and evaluations were conducted in the manner described below. Furthermore, in the following formulations, "parts" are parts by mass unless otherwise specified.

### Preparation of Crystalline Vinyl Resin Precursor 1

The following materials were put into a reaction container including a reflux cooling tube, a stirrer, a thermometer, and a nitrogen inlet tube under a nitrogen atmosphere.
·100.0 parts of toluene
·100.0 parts of a monomer composition
   (the monomer composition was a mixture of the following monomers in the following proportions)
   (60.0 parts of behenyl acrylate)
   (15.0 parts of styrene)
   (20.0 parts of acrylonitrile)
   (5.0 parts of n-butyl acrylate)
·0.5 parts of polymerization initiator t-butyl peroxypivalate (Perbutyl PV, commercially available from NOF Corporation)
The reaction container was heated to 70 °C with stirring at 200 rpm, and a polymerization reaction was performed for 12 hours to obtain a solution in which the polymer of the monomer composition was dissolved in toluene. Subsequently, the temperature of the solution was lowered to 25 °C, and the solution was then added to 1,000.0 parts of methanol with stirring to precipitate a methanol-insoluble fraction. The obtained methanol-insoluble fraction was filtered off, washing with methanol was additionally performed, and vacuum-drying was then performed at 40 °C for 24 hours to obtain a crystalline vinyl resin precursor 1. Table 1 shows the physical properties of the crystalline vinyl resin precursor 1.

### Preparation of Crystalline Vinyl Resin Precursors 2 to 13

Crystalline vinyl resin precursors 2 to 13 were prepared in the same manner as in the preparation of the crystalline vinyl resin precursor 1 except that the type and addition amount of monomer compositions were changed as shown in Table 1. Table 1 shows the physical properties of the crystalline resins 2 to 13.

**Table 1**

| Crystalline vinyl resin precursor No. | Monomer (a) | | | Other monomer 1 | | Other monomer 2 | | Other monomer 3 | | Polymerization initiator | Molecular weight |
|---|---|---|---|---|---|---|---|---|---|---|---|
| | Type | Number of carbon atoms n | Parts | Type | Parts | Type | Parts | Type | Parts | Parts | Mw |
| 1 | Behenyl acrylate | 21 | 60.0 | Styrene | 15.0 | Acrylonitrile | 20.0 | n-Butyl acrylate | 5.0 | 0.5 | 30200 |
| 2 | Behenyl acrylate | 21 | 50.0 | Styrene | 15.0 | Acrylonitrile | 20.0 | n-Butyl acrylate | 5.0 | 0.5 | 30700 |
| | Stearyl acrylate | 17 | 10.0 | | | | | | | | |
| 3 | Behenyl acrylate | 21 | 20.0 | Styrene | 15.0 | Acrylonitrile | 20.0 | n-Butyl acrylate | 5.0 | 0.5 | 31800 |
| | Stearyl acrylate | 17 | 40.0 | | | | | | | | |
| 4 | Behenyl acrylate | 21 | 30.0 | Styrene | 15.0 | Acrylonitrile | 20.0 | n-Butyl acrylate | 5.0 | 0.5 | 29700 |
| | Myricyl acrylate | 29 | 30.0 | | | | | | | | |
| 5 | Myricyl acrylate | 29 | 60.0 | Styrene | 15.0 | Acrylonitrile | 20.0 | n-Butyl acrylate | 5.0 | 0.5 | 31560 |
| 6 | Behenyl acrylate | 21 | 60.0 | Styrene | 15.0 | Methacrylonitrile | 20.0 | n-Butyl acrylate | 5.0 | 0.5 | 31800 |
| 7 | Behenyl acrylate | 21 | 60.0 | Styrene | 15.0 | N-vinyl-2-pyrrolidone | 20.0 | n-Butyl acrylate | 5.0 | 0.5 | 31400 |
| 8 | Behenyl acrylate | 21 | 60.0 | Styrene | 35.0 | - | - | n-Butyl acrylate | 5.0 | 0.5 | 30600 |
| 9 | Behenyl acrylate | 21 | 50.0 | Styrene | 25.0 | Acrylonitrile | 20.0 | n-Butyl acrylate | 5.0 | 0.5 | 31800 |
| 10 | Behenyl acrylate | 21 | 70.0 | Styrene | 15.0 | Acrylonitrile | 10.0 | n-Butyl acrylate | 5.0 | 0.5 | 30200 |
| 11 | Behenyl acrylate | 21 | 80.0 | Styrene | 10.0 | Acrylonitrile | 5.0 | n-Butyl acrylate | 5.0 | 0.5 | 31900 |
| 12 | Stearyl acrylate | 17 | 60.0 | Styrene | 15.0 | Acrylonitrile | 20.0 | n-Butyl acrylate | 5.0 | 0.5 | 32600 |
| 13 | Behenyl acrylate | 21 | 80.0 | Styrene | 18.0 | Methacrylic acid | 2.0 | - | - | 0.5 | 31900 |

### Preparation of Amorphous Polyester Resin 1

·1,000 parts by mass of propylene oxide 2 mol adduct of bisphenol
·270 parts by mass of isophthalic acid
·250 parts by mass of dodecenylsuccinic acid
The above monomers were put into a flask including a stirring device, a nitrogen inlet tube, a temperature sensor, and a rectification column, the temperature was raised to 195 °C over 1 hour, and it was confirmed that the components inside the reaction system were uniformly stirred. With respect to 100 parts by mass of these monomers, 1.2 parts by mass of tin distearate was added. In addition, while distilling off the water generated, the temperature was raised from 195 °C to 240 °C over 5 hours, and a dehydration condensation reaction was additionally performed at 240 °C for 2 hours.
Next, the temperature was lowered to 190 °C, 20 parts by mass of trimellitic anhydride was gradually added, and the reaction was continued at 190 °C for 1 hour to obtain an amorphous polyester resin 1. Table 2 shows the physical properties of the obtained amorphous polyester resin 1.

### Preparation of Amorphous Polyester Resins 2 to 4

Amorphous polyester resins 2 to 4 were prepared in the same manner as in the preparation of the amorphous polyester resin 1 except that the types and amounts of acid monomers and alcohol monomers used were changed as shown in Table 2. Table 2 shows the physical properties of the amorphous polyester resins 2 to 4.

**Table 2**

| Amorphous polyester resin No. | Alcohol monomer | | Acid monomer | | | | Physical properties of resin | | |
|---|---|---|---|---|---|---|---|---|---|
| | BPA-2PO | BPA-2EO | IPA | Unit monomer of Formula (2) | | TMA | Tg [°C] | Acid value [mgKOH/g] | Molecular weight [Mw] |
| | Parts | Parts | Parts | Parts | Type of R1 | Parts | | | |
| 1 | 1000 | 0 | 270 | 250 | Dodecenyl group | 20 | 65.7 | 5.3 | 13800 |
| 2 | 1000 | 0 | 350 | 100 | Dodecenyl group | 20 | 68.4 | 5.2 | 9800 |
| 3 | 1000 | 0 | 400 | 5.0 | Dodecenyl group | 20 | 71.2 | 5.1 | 14200 |
| 4 | 700 | 300 | 450 | 0 | - | 20 | 71.8 | 5.3 | 15500 |

| | | | | | | | | | |
|---|---|---|---|---|---|---|---|---|---|
| BPA-2PO: propylene oxide 2 mol adduct of bisphenol A BPA-2EO: ethylene oxide 2 mol adduct of bisphenol A IPA: isophthalic acid TMA: trimellitic anhydride | | | | | | | | | |

### Example 1

### Production of Toner by Suspension Polymerization Method

### Production of Toner Particle 1

·A mixture containing 54.6 parts of styrene,
·15.4 parts of n-butyl acrylate, and
·6.5 parts of a colorant (Pigment blue 15:3)
was prepared. The mixture was put into an attritor (commercially available from Nippon Coke & Engineering. Co., Ltd.), and dispersion was performed using zirconia beads with a diameter of 5 mm at 200 rpm for 2 hours to obtain a raw material-dispersed solution.

On the other hand, 735.0 parts of deionized water and 16.0 parts of trisodium phosphate (12-hydrate) were put into a container including a high-speed stirring device Homomixer (commercially available from Primix Corporation) and a thermometer, and heated to 60 °C with stirring at 12,000 rpm. A calcium chloride aqueous solution in which 9.0 parts of calcium chloride (dihydrate) was dissolved in 65.0 parts of deionized water was added thereto, and while maintaining the temperature at 60 °C, the mixture was stirred at 12,000 rpm for 30 minutes. 10% hydrochloric acid was added thereto to adjust the pH to 6.0, and thereby an aqueous medium in which an inorganic dispersion stabilizer containing hydroxyapatite was dispersed in water was obtained.

Subsequently, the raw material-dispersed solution was transferred to a container including a stirring device and a thermometer, and heated to 60 °C with stirring at 100 rpm.
·Crystalline vinyl resin precursor 1: 25.0 parts
·Amorphous polyester resin 1: 5.0 parts
·DP18 (dipentaerythritol stearate wax, a melting point of 79 °C, commercially available from The Nisshin OilliO Group, Ltd.): 9.0 parts
The above materials were added to the container and stirred at 100 rpm for 30 minutes while maintaining the temperature at 60 °C. 8.0 parts of t-butyl peroxypivalate (Perbutyl PV, commercially available from NOF Corporation) as a polymerization initiator was added, and the mixture was additionally stirred for 1 minute, and then added to an aqueous medium that was stirred at 12,000 rpm in the high-speed stirring device. While maintaining the temperature at 60 °C, stirring was continued at 12,000 rpm for 20 minutes by the high-speed stirring device to obtain a granulation liquid.

The granulation liquid was transferred to a reaction container including a reflux cooling tube, a stirrer, a thermometer, and a nitrogen inlet tube and heated to 76 °C under a nitrogen atmosphere with stirring at 150 rpm. While maintaining the temperature at 76 °C, a polymerization reaction was performed at 150 rpm for 6 hours to obtain a toner particle-dispersed solution.
The obtained toner particle-dispersed solution was cooled to 45 °C with stirring at 150 rpm and then heated for 5 hours while maintaining the temperature at 45 °C. Then, while maintaining stirring, dilute hydrochloric acid was added until the pH reached 1.5 to dissolve the dispersion stabilizer. The solid content was filtered off, sufficiently washed with deionized water, and then vacuum-dried at 30 °C for 24 hours to obtain toner particles 1.

### Preparation of Toner 1

2.0 parts of silica fine particles (hydrophobized with hexamethyldisilazane, the number average particle diameter of primary particles: 10 nm, BET specific surface area: 170 m²/g) as an external additive were added to 98.0 parts of the toner particles 1, and the mixture was mixed in a Henschel mixer (commercially available from Nippon Coke & Engineering. Co., Ltd.) at 3,000 rpm for 15 minutes to obtain a toner 1. Tables 4-1 and 4-2 show the physical properties of the obtained toner 1, and Table 5 shows the evaluation results.

**Table 3**

| | | Production method | Crystalline resin | | Polymerizable monomer 1 | | Polymerizable monomer 2 | | Amorphous polyester resin | |
|---|---|---|---|---|---|---|---|---|---|---|
| | | | Crystalline vinyl resin precursor No. | Addition amount (parts) | Type | Addition amount (parts) | Type | Addition amount (parts) | No. | Addition amount (parts) |
| Example 1 | 1 | X | 1 | 25.0 | St | 54.6 | nBA | 15.4 | 1 | 5.0 |
| Example 2 | 2 | X | 2 | 25.0 | St | 54.6 | nBA | 15.4 | 1 | 5.0 |
| Example 3 | 3 | X | 3 | 25.0 | St | 54.6 | nBA | 15.4 | 1 | 5.0 |
| Example 4 | 4 | X | 4 | 25.0 | St | 54.6 | nBA | 15.4 | 1 | 5.0 |
| Example 5 | 5 | X | 5 | 25.0 | St | 54.6 | nBA | 15.4 | 1 | 5.0 |
| Example 6 | 6 | X | 1 | 10.0 | St | 66.3 | nBA | 18.7 | 1 | 5.0 |
| Example 7 | 7 | X | 1 | 13.0 | St | 64.0 | nBA | 18.0 | 1 | 5.0 |
| Example 8 | 8 | X | 1 | 33.0 | St | 48.4 | nBA | 13.6 | 1 | 5.0 |
| Example 9 | 9 | X | 1 | 10.0 | St | 64.0 | nBA | 18.0 | 1 | 8.0 |
| Example 10 | 10 | X | 1 | 10.0 | St | 62.4 | nBA | 17.6 | 1 | 10.0 |
| Example 11 | 11 | X | 1 | 25.0 | St | 52.3 | nBA | 14.7 | 1 | 8.0 |
| Example 12 | 12 | X | 1 | 25.0 | St | 50.7 | nBA | 14.3 | 1 | 10.0 |
| Example 13 | 13 | X | 1 | 25.0 | St | 56.1 | nBA | 15.8 | 1 | 3.1 |
| Example 14 | 14 | X | 1 | 25.0 | St | 57.6 | nBA | 16.2 | 1 | 1.2 |
| Example 15 | 15 | X | 1 | 25.0 | St | 57.9 | nBA | 16.3 | 1 | 0.8 |
| Example 16 | 16 | X | 1 | 33.0 | St | 41.3 | nBA | 11.7 | 1 | 14.0 |
| Example 17 | 17 | X | 1 | 33.0 | St | 39.8 | nBA | 11.2 | 1 | 16.0 |
| Example 18 | 18 | X | 1 | 25.0 | St | 51.8 | nBA | 18.2 | 1 | 5.0 |
| Example 19 | 19 | X | 1 | 25.0 | St | 49.7 | nBA | 20.3 | 1 | 5.0 |
| Example 20 | 20 | X | 1 | 25.0 | St | 60.2 | nBA | 9.8 | 1 | 5.0 |
| Example 21 | 21 | X | 1 | 25.0 | St | 63.0 | nBA | 7.0 | 1 | 5.0 |
| Example 22 | 22 | X | 1 | 25.0 | St | 54.6 | nBA | 15.4 | 2 | 5.0 |
| Example 23 | 23 | X | 1 | 25.0 | St | 54.6 | nBA | 15.4 | 3 | 5.0 |
| Example 24 | 24 | X | 1 | 25.0 | St | 54.6 | nBA | 15.4 | 4 | 5.0 |
| Example 26 | 26 | X | 6 | 25.0 | St | 54.6 | nBA | 15.4 | 1 | 5.0 |
| Example 27 | 27 | X | 7 | 25.0 | St | 54.6 | nBA | 15.4 | 1 | 5.0 |
| Example 28 | 28 | X | 8 | 25.0 | St | 54.6 | nBA | 15.4 | 1 | 5.0 |
| Example 29 | 29 | X | 9 | 25.0 | St | 54.6 | nBA | 15.4 | 1 | 5.0 |
| Example 30 | 30 | X | 10 | 25.0 | St | 54.6 | nBA | 15.4 | 1 | 5.0 |
| Example 31 | 31 | X | 11 | 25.0 | St | 54.6 | nBA | 15.4 | 1 | 5.0 |
| Comparative Example 1 | Comparative 1 | X | 12 | 25.0 | St | 54.6 | nBA | 15.4 | 1 | 5.0 |
| Comparative Example 2 | Comparative 2 | X | 1 | 8.0 | St | 67.9 | nBA | 19.1 | 1 | 5.0 |
| Comparative Example 3 | Comparative 3 | X | 1 | 42.0 | St | 41.3 | nBA | 11.7 | 1 | 5.0 |
| Comparative Example 4 | Comparative 4 | X | 1 | 10.0 | St | 60.1 | nBA | 16.9 | 1 | 13.0 |
| Comparative Example 5 | Comparative 5 | X | 1 | 25.0 | St | 48.4 | nBA | 13.6 | 1 | 13.0 |
| Comparative Example 6 | Comparative 6 | X | 1 | 25.0 | St | 58.1 | nBA | 16.4 | 1 | 0.5 |

In Table 3, X is "Suspension polymerization method."
In the tables, St is styrene, and nBA is n-butyl acrylate.

**Table 4-1**

| Example No. | Toner No. | Peak temperature of melting point peak derived from crystalline resin in toner (°C) | Proportion of amorphous phase present in region A within amorphous phase present in entire cross-section of toner particle (area%) | Area proportion of amorphous phase in region A (area%) | Area proportion of crystalline phase in region B (area%) | Area proportion of crystalline phase in region other than region A (area%) | Proportion of amorphous vinyl resin in amorphous resin (mass%) | Content of amorpho us vinyl resin in binder resin (mass%) | Content of amorphous polyester resin in binder resin (mass%) | Content of crystalline vinyl resin in binder resin (mass%) |
|---|---|---|---|---|---|---|---|---|---|---|
| 1 | 1 | 61.0 | 85 | 64 | 18 | 81 | 88.9 | 40.0 | 5.0 | 55.0 |
| 2 | 2 | 57.0 | 84 | 65 | 17 | 80 | 88.4 | 38.0 | 5.0 | 57.0 |
| 3 | 3 | 52.0 | 84 | 64 | 16 | 82 | 88.6 | 39.0 | 5.0 | 56.0 |
| 4 | 4 | 67.0 | 86 | 64 | 16 | 81 | 89.6 | 43.0 | 5.0 | 52.0 |
| 5 | 5 | 74.0 | 85 | 65 | 19 | 81 | 89.1 | 41.0 | 5.0 | 54.0 |
| 6 | 6 | 60.1 | 62 | 62 | 19 | 50 | 93.8 | 76.0 | 5.0 | 19.0 |
| 7 | 7 | 60.4 | 72 | 63 | 18 | 68 | 93.7 | 74.0 | 5.0 | 21.0 |
| 8 | 8 | 61.1 | 86 | 47 | 38 | 88 | 84.4 | 27.0 | 5.0 | 68.0 |
| 9 | 9 | 60.9 | 84 | 78 | 12 | 78 | 90.1 | 73.0 | 8.0 | 19.0 |
| 10 | 10 | 61.3 | 85 | 88 | 6 | 75 | 87.7 | 71.0 | 10.0 | 19.0 |
| 11 | 11 | 61.0 | 85 | 64 | 12 | 82 | 82.1 | 36.6 | 8.0 | 55.4 |
| 12 | 12 | 60.8 | 85 | 64 | 6 | 80 | 77.7 | 34.9 | 10.0 | 55.1 |
| 13 | 13 | 61.3 | 84 | 62 | 28 | 79 | 93.1 | 41.7 | 3.1 | 55.2 |
| 14 | 14 | 61.4 | 81 | 60 | 35 | 81 | 97.3 | 43.7 | 1.2 | 55.1 |
| 15 | 15 | 61.4 | 80 | 59 | 39 | 82 | 98.2 | 43.9 | 0.8 | 55.3 |
| 16 | 16 | 61.4 | 99 | 59 | 18 | 97 | 56.1 | 17.9 | 14.0 | 68.1 |
| 17 | 17 | 61.4 | 99 | 53 | 12 | 97 | 49.8 | 15.9 | 16.0 | 68.1 |
| 18 | 18 | 61.0 | 86 | 65 | 18 | 81 | 88.9 | 40.0 | 5.0 | 55.0 |
| 19 | 19 | 61.0 | 85 | 65 | 18 | 81 | 88.9 | 40.0 | 5.0 | 55.0 |
| 20 | 20 | 61.0 | 85 | 64 | 17 | 81 | 88.9 | 40.0 | 5.0 | 55.0 |
| 21 | 21 | 61.0 | 84 | 65 | 19 | 81 | 88.9 | 40.0 | 5.0 | 55.0 |
| 22 | 22 | 61.0 | 85 | 64 | 18 | 81 | 88.9 | 40.0 | 5.0 | 55.0 |
| 23 | 23 | 61.0 | 85 | 64 | 18 | 81 | 88.9 | 40.0 | 5.0 | 55.0 |
| 24 | 24 | 61.2 | 84 | 63 | 19 | 81 | 88.9 | 40.0 | 5.0 | 55.0 |
| 25 | 25 | 61.5 | 81 | 61 | 15 | 80 | 88.9 | 40.0 | 5.0 | 55.0 |
| 26 | 26 | 61.0 | 84 | 65 | 18 | 81 | 88.9 | 40.0 | 5.0 | 55.0 |
| 27 | 27 | 61.0 | 85 | 65 | 19 | 81 | 88.9 | 40.0 | 5.0 | 55.0 |
| 28 | 28 | 61.2 | 84 | 63 | 19 | 80 | 88.9 | 40.0 | 5.0 | 55.0 |
| 29 | 29 | 57.8 | 87 | 66 | 16 | 78 | 89.6 | 43.0 | 5.0 | 52.0 |
| 30 | 30 | 61.0 | 83 | 62 | 22 | 83 | 88.1 | 37.0 | 5.0 | 58.0 |
| 31 | 31 | 61.0 | 81 | 60 | 24 | 84 | 86.5 | 32.0 | 5.0 | 63.0 |
| Comparative 1 | Comparative 1 | 47.0 | 85 | 65 | 17 | 82 | 88.6 | 39.0 | 5.0 | 56.0 |
| Comparative 2 | Comparative 2 | 60.1 | 58 | 61 | 19 | 50 | 94.2 | 81.0 | 5.0 | 14.0 |
| Comparative 3 | Comparative 3 | 61.1 | 86 | 43 | 38 | 88 | 80.0 | 20.0 | 5.0 | 75.0 |
| Comparative 4 | Comparative 4 | 61.3 | 85 | 92 | 6 | 75 | 84.0 | 68.0 | 13.0 | 19.0 |
| Comparative 5 | Comparative 5 | 60.8 | 85 | 64 | 4 | 80 | 71.0 | 31.9 | 13.0 | 55.1 |
| Comparative 6 | Comparative 6 | 61.4 | 80 | 59 | 42 | 82 | 98.9 | 44.2 | 0.5 | 55.3 |
| Comparative 7 | Comparative 7 | 61.3 | 39 | 49 | 47 | 51 | 100.0 | 67.0 | 0.0 | 33.0 |
| Comparative 8 | Comparative 8 | 65.0 | 99 | 12 | 50 | 99 | 100.0 | 9.1 | 0.0 | 90.9 |
| Comparative 9 | Comparative 9 | 65.0 | 99 | 75 | 0 | 99 | 100.0 | 35.5 | 0.0 | 64.5 |

In all the toners of the examples and comparative examples, when the cross section of the toner was observed, a phase-separated structure having a crystalline phase and an amorphous phase was present.

**Table 4-2**

| Example No. | Toner No. | Tg of amorphous vinyl resin (°C) | Shell of amorphous polyester resin | Storage modulus of crystalline vinyl resin at 80°C (Pa) | Weight average molecular weight of crystalline vinyl resin | Number average particle diameter of toner(µm) |
|---|---|---|---|---|---|---|
| 1 | 1 | 61 | Yes | 110000 | 156800 | 6.2 |
| 2 | 2 | 61 | Yes | 83000 | 146800 | 6.1 |
| 3 | 3 | 61 | Yes | 63000 | 156800 | 6.4 |
| 4 | 4 | 61 | Yes | 180000 | 163700 | 6.5 |
| 5 | 5 | 61 | Yes | 320000 | 145900 | 6.5 |
| 6 | 6 | 61 | Yes | 110000 | 146800 | 6.4 |
| 7 | 7 | 61 | Yes | 100000 | 164800 | 6.3 |
| 8 | 8 | 61 | Yes | 110000 | 146800 | 6.4 |
| 9 | 9 | 61 | Yes | 130000 | 156800 | 6.6 |
| 10 | 10 | 61 | Yes | 110000 | 164800 | 6.4 |
| 11 | 11 | 62 | Yes | 110000 | 147800 | 6.4 |
| 12 | 12 | 61 | Yes | 100000 | 154800 | 6.4 |
| 13 | 13 | 62 | Yes | 100000 | 164200 | 6.1 |
| 14 | 14 | 61 | Yes | 110000 | 146800 | 6.2 |
| 15 | 15 | 61 | Yes | 110000 | 163400 | 6.4 |
| 16 | 16 | 61 | Yes | 110000 | 152800 | 6.2 |
| 17 | 17 | 61 | Yes | 120000 | 153400 | 6.2 |
| 18 | 18 | 54 | Yes | 110000 | 146400 | 6.1 |
| 19 | 19 | 48 | Yes | 100000 | 148000 | 6.4 |
| 20 | 20 | 76 | Yes | 110000 | 164800 | 6.3 |
| 21 | 21 | 84 | Yes | 130000 | 154700 | 6.3 |
| 22 | 22 | 61 | Yes | 110000 | 145800 | 6.2 |
| 23 | 23 | 61 | Yes | 110000 | 152800 | 6.2 |
| 24 | 24 | 61 | Yes | 110000 | 153400 | 6.4 |
| 25 | 25 | 61.2 | - | 8800 | 30200 | 6.4 |
| 26 | 26 | 61 | Yes | 110000 | 146800 | 6.1 |
| 27 | 27 | 61 | Yes | 110000 | 139500 | 6.5 |
| 28 | 28 | 61 | Yes | 100000 | 134800 | 6.2 |
| 29 | 29 | 57.8 | Yes | 780000 | 142800 | 6.2 |
| 30 | 30 | 61 | Yes | 68700 | 145400 | 6.2 |
| 31 | 31 | 61 | Yes | 3300 | 147400 | 6.2 |
| Comparative 1 | Comparative 1 | 60.5 | Yes | 63000 | 146700 | 6.2 |
| Comparative 2 | Comparative 2 | 60.8 | Yes | 110000 | 146800 | 6.1 |
| Comparative 3 | Comparative 3 | 61.2 | Yes | 110000 | 135800 | 6.3 |
| Comparative 4 | Comparative 4 | 60.9 | Yes | 110000 | 143600 | 6.4 |
| Comparative 5 | Comparative 5 | 61.2 | Yes | 100000 | 142500 | 6.1 |
| Comparative 6 | Comparative 6 | 61.1 | Yes | 110000 | 147600 | 6.2 |
| Comparative 7 | Comparative 7 | 63 | - | 28000 | 30200 | 6.4 |
| Comparative 8 | Comparative 8 | 71 | - | 190 | 124800 | 6.1 |
| Comparative 9 | Comparative 9 | 71 | - | 190 | 126800 | 6.6 |

The column "Shell of amorphous polyester resin" in Table 4-2 indicates the presence or absence of a shell made of amorphous polyester resin.

### Examples 2 to 24, and 26 to 31

Toner particles 2 to 24, and 26 to 31 were obtained in the same manner as in Example 1 except that the types and addition amounts of crystalline vinyl resin precursors, polymerizable monomers, and amorphous polyester resins used were changed as shown in Table 3.
In addition, external addition was performed in the same manner as in Example 1 to obtain toners 2 to 24, and 26 to 31. Tables 4-1 and 4-2 show the physical properties of the toners, and Table 5 shows the evaluation results.

### Example 25

### Preparation of Crystalline Resin Dispersion Solution 1

·Toluene: 300.0 parts
·Crystalline vinyl resin precursor 1: 100.0 parts
The above materials were weighed out and mixed and dissolved at 90 °C to prepare a toluene solution 1.

Separately, 5.0 parts by mass of sodium dodecylbenzenesulfonate and 10.0 parts by mass of sodium laurate were added to 700.0 parts by mass of deionized water and heated and dissolved at 90 °C. Next, the toluene solution 1 and the aqueous solution were mixed and stirred at 7,000 rpm using an ultra-high speed stirring device T.K.ROBOMIX (commercially available from Primix Corporation). In addition, the mixture was emulsified using a high-pressure impact disperser Nanomizer (commercially available from Yoshida Kikai Co., Ltd.) at a pressure of 200 MPa. Then, toluene was removed using an evaporator, and the concentration was adjusted with deionized water to obtain a crystalline resin dispersion solution 1 with a concentration of 20 mass% of the crystalline resin 1 fine particle.
The 50% particle diameter (D50) based on volume distribution of the crystalline resin 1 fine particle was measured using a dynamic light scattering particle size analyzer Nanotrac UPA-EX150 (commercially available from Nikkiso Co., Ltd.), and found to be 0.40 µm.

### Preparation of Amorphous Polyester Resin Dispersion Solution 1

·Toluene: 300.0 parts
·Amorphous polyester resin 1: 100.0 parts
The above materials were weighed out and mixed and dissolved at 90 °C to prepare a toluene solution 2.

Separately, 5.0 parts by mass of sodium dodecylbenzenesulfonate and 10.0 parts by mass of sodium laurate were added to 700.0 parts by mass of deionized water and heated and dissolved at 90 °C. Next, the toluene solution 2 and the aqueous solution were mixed and stirred at 7,000 rpm using an ultra-high speed stirring device T.K.ROBOMIX (commercially available from Primix Corporation). In addition, the mixture was emulsified using a high-pressure impact disperser Nanomizer (commercially available from Yoshida Kikai Co., Ltd.) at a pressure of 200 MPa. Then, toluene was removed using an evaporator, and the concentration was adjusted with deionized water to obtain an amorphous polyester resin dispersion solution 1 with a concentration of 20 mass% of the amorphous polyester resin fine particle.
The 50% particle diameter (D50) based on volume distribution of the amorphous polyester resin fine particle was measured using a dynamic light scattering particle size analyzer Nanotrac UPA-EX150 (commercially available from Nikkiso Co., Ltd.), and found to be 0.38 µm.

### Preparation of Amorphous Vinyl Resin Dispersion Solution 1

·780.0 parts of styrene
·220.0 parts of n-butyl acrylate
·6.0 parts of dodecyl mercaptan
The above materials were mixed and dissolved, the resulting mixture was dispersed and emulsified in a flask in which 20.0 parts of an anionic surfactant Newrex paste H (commercially available from NOF Corporation) was dissolved in 1,300.0 parts of deionized water. While stirring for 10 minutes, 200.0 parts of deionized water in which 20.0 parts of ammonium persulfate was dissolved was added, purging with nitrogen was performed, the contents were then heated to 70 °C, and emulsion polymerization was performed for 6 hours. Then, the reaction solution was cooled to room temperature, and the concentration was adjusted with deionized water to prepare an amorphous vinyl resin dispersion solution 1 with a concentration of 20 mass% of the amorphous vinyl resin fine particle.
The 50% particle diameter (D50) based on volume distribution of the amorphous vinyl resin fine particle was measured using a dynamic light scattering particle size analyzer Nanotrac UPA-EX150 (commercially available from Nikkiso Co., Ltd.), and found to be 0.35 µm.

### Preparation of Release Agent Dispersion Solution

·100.0 parts of DP18 (dipentaerythritol stearate wax, a melting point of 79 °C, commercially available from The Nisshin OilliO Co, Ltd.)
·5.0 parts of an anionic surfactant Neogen RK (commercially available from DKS Co., Ltd.)
·395.0 parts of deionized water
The above materials were weighed out and put into a mixing container including a stirring device, then heated to 90 °C, circulated through a ClearMix W motion (commercially available from M Technique Co., Ltd.), and subjected to a dispersion treatment for 60 minutes. Dispersion treatment conditions were as follows.
·a rotor outer diameter of 3 cm
·a clearance of 0.3 mm
·a rotor rotation speed of 19,000 r/min
·a screen rotation speed of 19,000 r/min
After the dispersion treatment, the mixture was cooled to 40 °C under cooling treatment conditions: a rotor rotation speed of 1,000 r/min, a screen rotation speed of 0 r/min, and a cooling rate of 10 °C/min to obtain a release agent dispersion solution with a concentration of 20 mass% of the release agent fine particle.
The 50% particle diameter (D50) based on volume distribution of the release agent fine particle was measured using a dynamic light scattering particle size analyzer Nanotrac UPA-EX150 (commercially available from Nikkiso Co., Ltd.), and found to be 0.15 µm.

### Preparation of Colorant Dispersion Solution

·50.0 parts by mass of a colorant
   (cyan pigment Pigment Blue 15:3, commercially available from Dainichiseika Color & Chemicals Mfg. Co., Ltd.)
·7.5 parts by mass of an anionic surfactant Neogen RK (commercially available from DKS Co., Ltd.)
-442.5 parts by mass of deionized water
The above materials were weighed out, mixed, dissolved, and dispersed using a high-pressure impact disperser Nanomizer (commercially available from Yoshida Kikai Co., Ltd.) for 1 hour to obtain a colorant dispersion solution with a concentration of 10 mass% of the colorant fine particle obtained by dispersing a colorant.
The 50% particle diameter (D50) based on volume distribution of the colorant fine particle was measured using a dynamic light scattering particle size analyzer Nanotrac UPA-EX150 (commercially available from Nikkiso Co., Ltd.), and found to be 0.20 µm.

### Production of Toner 25

·Crystalline resin dispersion solution 1: 275.0 parts
·Amorphous vinyl resin dispersion solution 1: 50.0 parts
·Release agent dispersion solution: 45.0 parts
·Colorant dispersion solution: 65.0 parts
·Deionized water: 160.0 parts
The above materials were put into a round stainless steel flask and mixed. Then, the mixture was dispersed using a homogenizer Ultra-Turrax T50 (commercially available from IKA) at 5,000 r/min for 10 minutes. After a 1.0% nitric acid aqueous solution was added to adjust the pH to 3.0, the mixture was heated to 58 °C in a water bath for heating while appropriately adjusting the rotation speed using a stirring blade so that the mixed solution was stirred.
The volume-average particle diameter of the formed aggregated particles was appropriately determined using Coulter Multisizer III, and when the aggregated particles having a number average particle diameter of 3.0 µm were formed, 150.0 parts of the amorphous vinyl resin dispersion solution 1 and 25.0 parts of the amorphous polyester resin dispersion solution 1 were added, and the reaction was additionally continued. When the number average particle diameter reached 6.3 µm, the pH was adjusted to 9.0 using a 5% sodium hydroxide aqueous solution. Then, the mixture was heated to 75 °C while continuing stirring. Then, the mixture was left at 75 °C for 1 hour, and aggregated particles were fused.

Then, the mixture was cooled to 45 °C and heated for 5 hours. Then, the mixture was cooled to 25 °C, filtered, and subjected to solid-liquid separation, and then washed with deionized water. After washing was completed, drying was performed using a vacuum dryer to obtain toner particles 25 with a number average particle diameter of 6.4 µm.
External addition was performed on the toner particles 25 in the same manner as in Example 1 to obtain a toner 25. Tables 4-1 and 4-2 show the physical properties of the toner 25, and Table 5 shows the evaluation results.

### Comparative Examples 1 to 6

Comparative toner particles 1 to 6 were obtained in the same manner as in Example 1 except that the types and addition amounts of crystalline resins, polymerizable monomers, and polyester resins used were changed as shown in Table 3.
In addition, external addition was performed in the same manner as in Example 1 to obtain comparative toners 1 to 6. Tables 4-1 and 4-2 show the physical properties of the toners, and Table 5 shows the evaluation results.

### Comparative Example 7

### Production of Comparative Toner 7

·38.0 parts of methyl methacrylate
·20.0 parts of lauryl acrylate
·9.0 parts of n-butyl acrylate
·8.0 parts of a colorant (carbon black)
A mixture containing the above materials was prepared. The mixture was put into an Attritor (commercially available from Nippon Coke & Engineering. Co., Ltd.), and dispersion was performed using zirconia beads with a diameter of 5 mm at 200 rpm for 2 hours to obtain a raw material-dispersed solution.

On the other hand, 735.0 parts of deionized water and 16.0 parts of trisodium phosphate (12-hydrate) were put into a container including a high-speed stirring device Homomixer (commercially available from Primix Corporation) and a thermometer, and heated to 60 °C with stirring at 12,000 rpm. A calcium chloride aqueous solution in which 9.0 parts of calcium chloride (dihydrate) was dissolved in 65.0 parts of deionized water was added thereto, and while maintaining the temperature at 60 °C, the mixture was stirred at 12,000 rpm for 30 minutes. 10% hydrochloric acid was added thereto to adjust the pH to 6.0, and thereby an aqueous medium in which an inorganic dispersion stabilizer containing hydroxyapatite was dispersed in water was obtained.

Subsequently, the raw material-dispersed solution was transferred to a container including a stirring device and a thermometer, and heated to 60 °C with stirring at 100 rpm.
·Crystalline vinyl resin precursor 13: 33.0 parts
·Release agent: 9.0 parts
   (release agent: DP18 (dipentaerythritol stearate wax), a melting point of 79 °C, commercially available from Nippon Seiro Co., Ltd.)
The above materials were added thereto and stirred at 100 rpm for 30 minutes while maintaining the temperature at 60 °C, 5.0 parts of t-butyl peroxypivalate (Perbutyl PV, commercially available from NOF Corporation) as a polymerization initiator was then added, and the mixture was additionally stirred for 1 minute to obtain a raw material mixture. Then, the obtained raw material mixture was added to an aqueous medium that was stirred at 12,000 rpm in the high-speed stirring device. While maintaining the temperature at 60 °C, stirring was continued at 12,000 rpm for 20 minutes by the high-speed stirring device to obtain a granulation liquid.

The granulation liquid was transferred to a reaction container including a reflux cooling tube, a stirrer, a thermometer, and a nitrogen inlet tube and heated to 70 °C under a nitrogen atmosphere with stirring at 150 rpm. While maintaining the temperature at 70 °C, a polymerization reaction was performed at 150 rpm for 12 hours to obtain a toner particle-dispersed solution.
The obtained toner particle-dispersed solution was cooled to 45 °C with stirring at 150 rpm and then heated for 5 hours while maintaining the temperature at 45 °C. Then, while maintaining stirring, dilute hydrochloric acid was added until the pH reached 1.5 to dissolve the dispersion stabilizer. The solid content was filtered off, sufficiently washed with deionized water, and then vacuum-dried at 30 °C for 24 hours to obtain comparative toner particles 7.
In addition, external addition was performed in the same manner as in Example 1 to obtain a comparative toner 7. Tables 4-1 and 4-2 show the physical properties of the obtained comparative toner 7, and Table 5 shows the evaluation results.

### Comparative Example 8

### Preparation of Amorphous Vinyl Resin 2

The following materials were put into a reaction container including a reflux cooling tube, a stirrer, and a nitrogen inlet tube under a nitrogen atmosphere.
·100.0 parts of toluene
·84.5 parts of styrene
·11.3 parts of n-butyl acrylate
·2.5 parts of methyl methacrylate
·1.7 parts of methacrylic acid
·3.0 parts of t-butyl peroxypivalate
The contents of the container were stirred at 200 rpm, heated to 70 °C, and stirred for 10 hours. In addition, the mixture was heated to 100 °C and polymerized for 6 hours. Then, the solvent was distilled off to obtain an amorphous vinyl resin 2. The Tg of the amorphous vinyl resin 2 was 71 °C.

### Production Example of Comparative Toner 8

·100.0 parts of behenyl acrylate
·0.7 parts of 1,10-decanediol diacrylate
·6.5 parts of Pigment blue 15:3
·1.0 part of aluminum salicylate compound
   (Bontron E-88, commercially available from Orient Chemical Industries Co., Ltd.)
·9.0 parts of release agent paraffin wax
   (HNP-51, a melting point of 74 °C, commercially available from Nippon Seiro Co., Ltd.)
·10.0 parts of amorphous vinyl resin 2
·100.0 parts of toluene
A monomer mixture containing the above materials was prepared. 15 mm zirconia beads were added thereto, and the mixture was dispersed using an Attritor (commercially available from Mitsui Miike Machinery Co., Ltd.) for 2 hours to obtain a monomer composition.

Next, 800 parts of deionized water and 15.5 parts of tricalcium phosphate were put into a container including a high-speed stirring device TK-Homomixer (commercially available from Tokushu Kika Kogyo Co., Ltd.), the rotation speed was adjusted to 15,000 rpm, and the mixture was heated to 70 °C to form a dispersion medium system.
6.0 parts of t-butyl peroxypivalate as a polymerization initiator were added to the monomer composition, and this mixture was put into the dispersion medium system. The granulation process was performed for 20 minutes while maintaining the high-speed stirring device at 12,000 rpm. Then, the stirrer was changed from the high-speed stirring device to a propeller stirring blade, polymerization was performed for 10 hours while maintaining the temperature at 70 °C with stirring at 150 rpm, and the solvent was then removed at 95 °C for 5 hours. The obtained toner particle-dispersed solution was cooled to 20 °C, and dilute hydrochloric acid was then added until the pH reached 1.5. In addition, the mixture was sufficiently washed with deionized water, and then filtered and dried to obtain comparative toner particles 8.
Next, external addition was performed in the same manner as in Example 1 to obtain a comparative toner 8. Tables 4-1 and 4-2 show the physical properties of the obtained comparative toner 8, and Table 5 shows the evaluation results.

### Comparative Example 9

### Preparation of Amorphous Vinyl Resin Dispersion Solution 2

The following raw materials were put into a reaction container including a stirrer, a condenser, a thermometer, and a nitrogen inlet tube, and heated and dissolved at a temperature of 80 °C.
·100.0 parts of amorphous vinyl resin 2
·45.0 parts of methyl ethyl ketone
·45.0 parts of tetrahydrofuran
·0.8 parts of diethylaminoethanol
Next, with stirring, 300.0 parts of deionized water was slowly added at a temperature of 80 °C to cause phase inversion emulsion, and the obtained aqueous dispersion was then transferred to a distillation device, and distilled until the distillate temperature reached 100 °C.
After cooling, deionized water was added to the obtained aqueous dispersion, and the amorphous vinyl resin concentration in the dispersion solution was adjusted to 20 mass%. This was taken as an amorphous vinyl resin dispersion solution 2. The 50% particle diameter (D50) based on volume distribution of the amorphous vinyl resin dispersion solution 2 was measured using a dynamic light scattering particle size analyzer Nanotrac UPA-EX150 (commercially available from Nikkiso Co., Ltd.), and found to be 0.53 µm.

### Production Example of Comparative Toner 9

In a production example of a comparative toner 8, a polymerization reaction was performed without adding an amorphous vinyl resin during polymerization. After the polymerization was completed, the obtained resin particle dispersion solution was cooled, deionized water was added, and the resin particle concentration in the dispersion solution was adjusted to 20% to prepare a core particle-dispersed solution.
Next, 275.0 parts of the amorphous vinyl resin dispersion solution 2 (a solid content of 55.0 parts) and 20.0 parts of an anionic surfactant (product name: Neogen SC, commercially available from DKS Co., Ltd.) were added to 500.0 parts of the core particle-dispersed solution (a solid content of 100.0 parts), and the mixture was heated to 71.0 °C. In addition, sodium hydroxide was appropriately added, the pH of the system was maintained at 4.0 or less, the mixture was left without change for 3 hours, and aggregated particles were fused. Then, the mixture was cooled to 25 °C, sufficiently washed with deionized water, then filtered, dried, and classified to obtain comparative toner particles 9.
In addition, external addition was performed in the same manner as in Example 1 to obtain a comparative toner 9. Tables 4-1 and 4-2 show the physical properties of the obtained comparative toner 9, and Table 5 shows the evaluation results.

### Toner Evaluating Method

### <1> Low-temperature Fixability

A process cartridge filled with a toner was left at 25 °C and a humidity of 40% RH for 48 hours. Using LBP-712Ci modified so that it could operate even if the fixing unit was removed, an unfixed image with an image pattern in which 10 mm×10 mm square images were evenly arranged at 9 points across the entire transfer paper was output. The amount of the toner applied to the transfer paper was 0.60 mg/cm², and the fixing onset temperature was evaluated. Here, the transfer paper used was A4 size paper ("prober bond paper": 105 g/m², commercially available from Fox River).
The fixing unit used was an external fixing unit that could operate outside a laser beam printer by removing the fixing unit of LBP-712Ci to the outside. Here, the fixation temperature of the external fixing unit was increased in 5 °C increments from 90 °C, and fixing was performed under conditions of a process speed: 300 mm/sec.
The fixed image was visually checked, the lowest temperature at which no cold offset occurred was set as the fixing onset temperature, and the low-temperature fixability was evaluated. The evaluation results are shown in Table 5.

### Evaluation Criteria

A: The fixing onset temperature was 100 °C or lower
B: The fixing onset temperature was from 105 °C to 110 °C
C: The fixing onset temperature was from 115 °C to 120 °C
D: The fixing onset temperature was 125 °C or higher

### <2> Image Robustness (Pencil Set-off Resistance)

In the same method as in the above evaluation <1>, fixed images were printed. The fixation temperature was set to a temperature 10 °C higher than the fixing onset temperature. One sheet of blank prober bar bond paper was placed on the obtained fixed image, and drawing was performed using a pencil with a hardness of H from above to fill a 10 mm×10 mm square image at an angle of 45°t5° under a load of 1 kg. Image densities before and after the test were measured, and the rate of decrease in image density ΔD (%) was calculated by the following formula. This ΔD (%) was used as an index of image robustness. 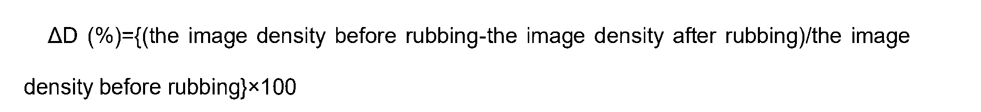 ΔD (%)={(the image density before rubbing-the image density after rubbing)/the image density before rubbing}×100 The image density was measured using a color reflection densitometer (Color reflection densitometer X-Rite 404A: commercially available from X-Rite). The evaluation results are shown in Table 5.

### Evaluation Criteria

A: The rate of decrease in image density was less than 3.0%.
B: The rate of decrease in image density was 3.0% or more and less than 7.0%.
C: The rate of decrease in image density was 7.0% or more and less than 10.0%.
D: The rate of decrease in image density was 10.0% or more.

### <3> Heat-resistant Storage Stability

In order to evaluate the stability during storage, the heat-resistant storability was evaluated. 5 g of the toner was placed in a 100 ml resin cup and left in an environment at a temperature of 50 °C and a humidity 40 RH% for 10 days, the degree of aggregation of the toner was then measured as follows, and evaluated according to the following criteria.
As the measurement device, a device obtained by connecting a digital display vibration meter "DIGI-VIBRO MODEL 1332A" (commercially available from Showasokki Co., Ltd.) to a vibration table side part of a "powder tester" (commercially available from Hosokawa Micron Corporation) was used. Then, on the vibration table of the powder tester, a sieve with an opening of 38 µm (400 mesh), a sieve with an opening of 75 µm (200 mesh), and a sieve with an opening of 150 µm (100 mesh) were stacked and set in that order from bottom to top. The measurement was performed in an environment at 23 °C and 60%RH as follows.
(1) The vibration amplitude of the vibration table was adjusted in advance so that the displacement value of a digital display vibration meter was 0.60 mm (peak-to-peak).
(2) The toner that had been left for 10 days as described above was left in advance in an environment at 23 °C and 60% RH for 24 hours, and 5.00 g of the toner was then accurately weighed out, and gently placed on the top sieve with an opening of 150 µm.
(3) The sieve was vibrated for 15 seconds, the mass of the toner remaining on each sieve was then measured, and the degree of agglomeration was calculated based on the following formula. The evaluation results are shown in Table 5.
$\begin{matrix}Degree of aggregation \left(%\right) = \\ { ( the mass \left\{\left(\left(g\right) of the sample on the sieve with an opening of 150 μm/5.00\left(g\right)\right)\right\} \times 100 + { ( the\end{matrix}$

### Evaluation Criteria

A: The degree of aggregation was less than 10.0%
B: The degree of aggregation was 10.0% or more and less than 15.0%.
C: The degree of aggregation was 15.0% or more and less than 20.0%.
D: The degree of aggregation was 20.0% or more

**Table 5**

| Example No. | Toner No. | Low-temperature fixability | | Image robustness | | Heat-resistant storage stability | |
|---|---|---|---|---|---|---|---|
| | | Fixing onset temperature (°C) | X | Rate of decrease in image density in pencil test (% ) | X | Degree of agglomeration at 50°C for 10 days (% ) | X |
| 1 | 1 | 100 | A | 1.9 | A | 3.8 | A |
| 2 | 2 | 95 | A | 2.1 | A | 12.5 | B |
| 3 | 3 | 90 | A | 2.1 | A | 18.9 | C |
| 4 | 4 | 110 | B | 2.2 | A | 4.8 | A |
| 5 | 5 | 120 | C | 2.1 | A | 3.8 | A |
| 6 | 6 | 115 | C | 8.8 | C | 4.2 | A |
| 7 | 7 | 110 | B | 6.5 | B | 4.4 | A |
| 8 | 8 | 100 | A | 9.5 | C | 4.5 | A |
| 9 | 9 | 110 | B | 1.9 | A | 4.8 | A |
| 10 | 10 | 120 | C | 2.2 | A | 4.2 | A |
| 11 | 11 | 105 | B | 2.2 | A | 3.9 | A |
| 12 | 12 | 115 | C | 2.1 | A | 4.1 | A |
| 13 | 13 | 100 | A | 5.9 | B | 6.3 | A |
| 14 | 14 | 100 | A | 7.3 | C | 8.8 | A |
| 15 | 15 | 100 | A | 9.2 | C | 9.2 | A |
| 16 | 16 | 100 | A | 2.9 | A | 4.4 | A |
| 17 | 17 | 105 | B | 3.9 | B | 3.9 | A |
| 18 | 18 | 100 | A | 2.1 | A | 10.8 | B |
| 19 | 19 | 100 | A | 2.2 | A | 13.2 | B |
| 20 | 20 | 95 | A | 2.8 | A | 5.2 | A |
| 21 | 21 | 105 | B | 3.8 | B | 4.3 | A |
| 22 | 22 | 100 | A | 3.1 | B | 4.5 | A |
| 23 | 23 | 100 | A | 5.8 | B | 6.4 | A |
| 24 | 24 | 100 | A | 7.3 | C | 7.8 | A |
| 25 | 25 | 100 | A | 6.6 | B | 14.2 | B |
| 26 | 26 | 100 | A | 1.9 | A | 4.2 | A |
| 27 | 27 | 100 | A | 2.0 | A | 4.4 | A |
| 28 | 28 | 105 | B | 4.1 | B | 3.9 | A |
| 29 | 29 | 100 | A | 1.9 | A | 3.8 | A |
| 30 | 30 | 100 | A | 1.9 | A | 4.3 | A |
| 31 | 31 | 95 | A | 1.9 | A | 5.9 | A |
| Comparative 1 | Comparative 1 | 90 | A | 2.9 | A | 23.0 | D |
| Comparative 2 | Comparative 2 | 100 | A | 11.3 | D | 4.2 | A |
| Comparative 3 | Comparative 3 | 100 | A | 10.9 | D | 4.4 | A |
| Comparative 4 | Comparative 4 | 130 | D | 2.2 | A | 4.4 | A |
| Comparative 5 | Comparative 5 | 130 | D | 2.4 | A | 4.8 | A |
| Comparative 6 | Comparative 6 | 100 | A | 11.5 | D | 9.3 | A |
| Comparative 7 | Comparative 7 | 105 | B | 12.8 | D | 11.2 | B |
| Comparative 8 | Comparative 8 | 105 | B | 11.9 | D | 8.8 | A |
| Comparative 9 | Comparative 9 | 130 | D | 6.8 | B | 3.9 | A |

In Table 5, X is "Evaluation."

Various embodiments have been described in detail above but it will be understood that the present disclosure is not limited to these embodiments and encompasses all modifications, variants, alternatives and equivalents falling within the scope of the appended claims.

## Claims

1. A toner comprising a toner particle comprising a binder resin, wherein
the binder resin comprises a crystalline resin and an amorphous resin,
the crystalline resin comprises a crystalline vinyl resin having a monomer unit (a) represented by Formula (1) below,
in differential scanning calorimetry (DSC) using the toner as a sample, a melting point peak derived from the crystalline vinyl resin is observed in a range of 50.0 to 80.0°C,
when a cross section of the toner is observed under a scanning transmission electron microscope,
(i) a phase-separated structure having a crystalline phase comprising the crystalline resin as a main component and an amorphous phase comprising the amorphous resin as a main component is present in the cross section of the toner particle,
(ii) when the region from the surface of the toner particle up to 700 nm into the toner particle is defined as a region A, and the region from the surface of the toner particle up to 200 nm into the toner particle is defined as a region B,
within the amorphous phase present in the entire cross-section of the toner particle, at least 60 area% of the amorphous phase is present in the region A,
an area proportion of the amorphous phase in the region A is 45 to 90 area%,
an area proportion of the crystalline phase in the region B is 5 to 40 area%: 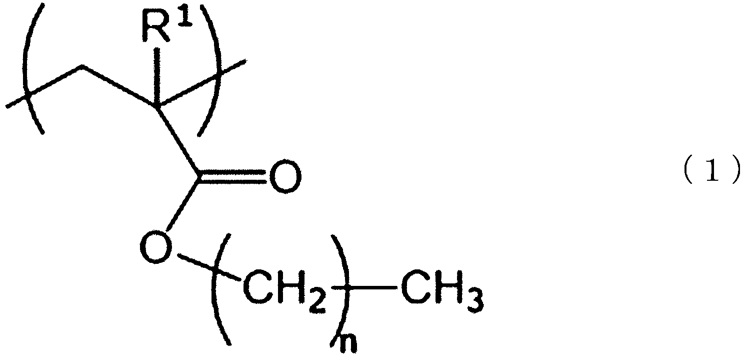
in Formula (1), R¹ is a hydrogen atom or a methyl group, n is an integer of 15 to 35.

2. The toner according to claim 1, wherein
the amorphous resin comprises an amorphous vinyl resin, and
a content of the amorphous vinyl resin in the amorphous resin is at least 50.0 mass%.

3. The toner according to claim 1 or 2, wherein a content of the amorphous vinyl resin in the binder resin is 10.0 to 60.0 mass%.

4. The toner according to any one of claims 1 to 3, wherein a glass transition temperature (Tg) of the amorphous vinyl resin is 50 to 80°C.

5. The toner according to any one of claims 1 to 4, wherein
the amorphous resin comprises an amorphous polyester resin, and
the amorphous polyester resin has a monomer unit based on at least one monomer selected from the group consisting of trimellitic acid and trimellitic anhydride.

6. The toner according to claim 5, wherein a content of the amorphous polyester resin in the binder resin is 1.0 to 15.0 mass%.

7. The toner according to claim 5, wherein the amorphous polyester resin has a monomer unit represented by Formula (2) below: 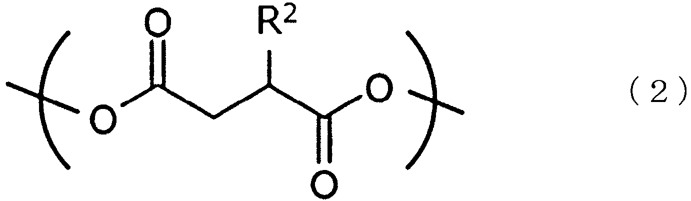 in Formula (2), R² is an alkyl group or alkenyl group having 8 to 16 carbon atoms.

8. The toner according to claim 5, wherein the toner particle comprises a shell formed of the amorphous polyester resin.

9. The toner according to any one of claims 1 to 8, wherein a content of the crystalline vinyl resin in the binder resin is 5.0 to 70.0 mass%.

10. The toner according to any one of claims 1 to 9,
wherein the crystalline vinyl resin has a monomer unit based on at least one monomer selected from the group consisting of acrylonitrile, methacrylonitrile and N-vinyl-2-pyrrolidone.

11. The toner according to any one of claims 1 to 10, wherein a storage modulus of the crystalline vinyl resin at 80°C is 1.0×10³ to 1.0×10⁶ Pa.

12. The toner according to any one of claims 1 to 11, wherein in a region other than the region A of the cross section of the toner particle, an area proportion of the crystalline phase in the region other than the region A is at least 60 area%.

13. The toner according to any one of claims 1 to 12, wherein the area proportion of the amorphous phase in the region A is 45 to 80 area%.

14. The toner according to any one of claims 1 to 13, wherein the area proportion of the crystalline phase in the region B is 5 to 30 area%.

15. The toner according to any one of claims 1 to 14, wherein the toner has a number average particle diameter of 4.0 to 10.0 µm.
